(19) Europäisches Patentamt
European Patent Office
Office européen des brevets

(11) **EP 3 913 395 B1**

(12) **FASCICULE DE BREVET EUROPEEN**

(45) Date de publication et mention de la délivrance du brevet:
**23.11.2022 Bulletin 2022/47**

(21) Numéro de dépôt: **21172822.5**

(22) Date de dépôt: **07.05.2021**

(51) Classification Internationale des Brevets (IPC):
***G01S 17/34*** *(2020.01)*

(52) Classification Coopérative des Brevets (CPC):
**G01S 7/4816; G01S 7/4918; G01S 7/493; G01S 17/34; G01S 17/894;** G01S 7/4814

(54) **DETECTEUR AMELIORE AVEC ELEMENTS DE DEVIATION POUR IMAGERIE COHERENTE**
VERBESSERTER DETEKTOR MIT UMLENKELEMENTEN FÜR KOHÄRENTE BILDGEBUNG
IMPROVED DETECTOR WITH DEFLECTING ELEMENTS FOR COHERENT IMAGING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.05.2020 FR 2005190**

(43) Date de publication de la demande:
**24.11.2021 Bulletin 2021/47**

(73) Titulaire: **Commissariat à l’Energie Atomique et aux Energies Alternatives**
**75015 Paris (FR)**

(72) Inventeurs:
- **FREY, Laurent**
  **38054 Grenoble Cedex 09 (FR)**
- **DAAMI, Anis**
  **38054 Grenoble Cedex 09 (FR)**
- **FANGET, Stéphane**
  **38054 Grenoble Cedex 09 (FR)**

(74) Mandataire: **Atout PI Laplace**
**Immeuble "Visium"**
**22, avenue Aristide Briand**
**94117 Arcueil Cedex (FR)**

(56) Documents cités:
**US-A1- 2015 268 481** **US-A1- 2018 143 319**
**US-A1- 2019 293 956**

- **Fergal Shevlin: "Speckle reduction within nanosecond-order pulse widths for flash lidar applications", , 21 avril 2020 (2020-04-21), XP055766371, Extrait de l’Internet: URL:http://www.dyoptyka.com/publications/Dyoptyka-Abstract-LDC-2020.pdf [extrait le 2021-01-18]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Processed by Luminess, 75001 PARIS (FR)

## Description

### DOMAINE DE L'INVENTION

La présente invention concerne le domaine de l'imagerie cohérente et de l'imagerie par Lidar cohérent. Plus particulièrement l'invention concerne les détecteurs utilisés dans de tels systèmes.

### ETAT DE LA TECHNIQUE

On connaît le domaine de l'imagerie cohérente, qui consiste à effectuer une image d'une scène éclairée par une source cohérente, tel un laser, via une optique d'imagerie imageant la scène sur un détecteur. Ce type d'imagerie est également dénommée imagerie active car on associe au détecteur sa propre source d'éclairage pour illuminer la scène au moment de l'observation, typiquement un laser. L'utilisation d'une longueur d'onde ad hoc permet par exemple d'imager une scène au travers d'éléments diffusant la lumière visible mais pas la lumière d'illumination ou d'imager une scène de nuit. L'imagerie d'une scène par Lidar tire parti de la nature de l'émission cohérente d'une source laser afin d'amplifier le signal utile réfléchi par la scène par un signal issu d'une voie de référence et cohérent avec le signal utile.

Le principe d'un lidar cohérent est bien connu de l'état de la technique. Un lidar cohérent comprend une source cohérente, typiquement un laser, qui émet une onde lumineuse cohérente (domaine IR, visible ou UV proche), un dispositif d'émission qui permet d'illuminer un volume de l'espace, et un dispositif de réception, qui collecte une fraction de l'onde lumineuse rétrodiffusée par une cible T. Le décalage de fréquence Doppler de l'onde rétrodiffusée est fonction de la vitesse radiale v de la cible T : A la réception on effectue un mélange entre l'onde lumineuse rétrodiffusée reçue dénommée onde signal S de fréquence signal fs et une partie de l'onde émise qui n'est pas passée par la scène, dénommée onde LO pour « oscillateur local », et présente une fréquence d'oscillateur local $f_{LO}$. L'interférence de ces deux ondes est détectée par un photodétecteur PD, et le signal électrique en sortie du détecteur présente un terme oscillant dénommé signal de battement Sb, en plus des termes proportionnels à la puissance reçue et à la puissance d'oscillateur local. Ce signal est numérisé et on en extrait une information de localisation d'un objet situé dans une scène à observer.

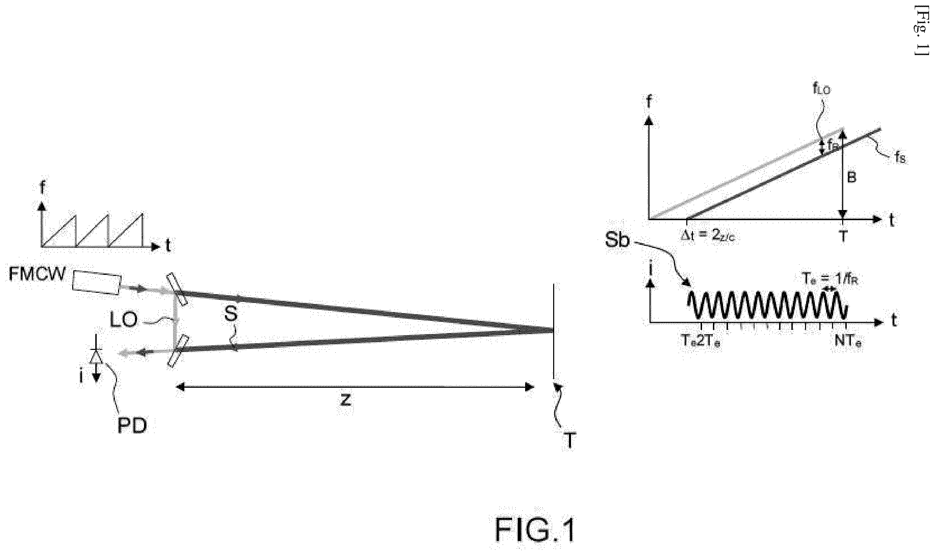

Dans un lidar cohérent à modulation de fréquence dit FMCW (« Frequency Modulated Continuous Wave ») schématisé sur la figure 1 la fréquence optique de la source cohérente f est modulée typiquement par une rampe linéaire périodique.

Ainsi l'imagerie lidar FMCW comprend les étapes suivantes :

- on module la fréquence électromagnétique d'une source lumineuse cohérente telle qu'un laser,
- on sépare le faisceau émis par le laser en deux voies par un élément de séparation: une première voie qui éclaire un point de la scène, sur lequel la lumière est ensuite rétrodiffusée et dont une partie atteint le photorécepteur, et une voie de référence (oscillateur local) qui ne passe pas par la scène, et parcourt un chemin plus court pour atteindre le photo-détecteur,
- on recombine les deux voies, c'est-à-dire qu'on les superpose spatialement par un élément recombineur, et donc les deux voies interfèrent, en particulier sur le photodétecteur, avec des longueurs d'onde/fréquences différentes compte tenu du retard, i.e. de la différence de chemin optique parcouru. Les interférences se manifestent par des oscillations temporelles de l'intensité lumineuse, ou battements, dont la fréquence est proportionnelle au retard entre les deux voies, donc à la distance. Les battements sont mesurés par le photo-détecteur, et la distance à mesurer est proportionnelle à la fréquence des battements.

Plus précisément, pour une rampe linéaire, la fréquence des oscillations est :

$$f_R = \frac{2Bz}{cT}$$

avec B l'excursion de fréquence optique ou « chirp » pendant la durée T de la rampe, z la distance, c la vitesse de la lumière.

On déduit la distance z du nombre N ($N \approx Tf_R$) de périodes mesurées pendant la durée T:

$$z \approx \frac{Nc}{2B}.$$

La résolution en distance est :

$$\delta z \approx \frac{c}{2B}.$$

Il est également possible de mesurer $f_R$ par analyse spectrale par transformée de Fourier du signal de battements.

Le signal d'interférence contient une composante continue généralement importante et inutile, qui est supprimée par un filtre électronique passe-haut si le photo-récepteur est une photodiode. Dans les montages fibrés, il est pratique d'utiliser un coupleur 3dB qui fournit, à partir des deux voies objet et référence en entrée, deux signaux de sortie en opposition de phase qui éclairent deux photodiodes en série (photodiodes balancées). Le circuit de détection permet de faire la différence des deux photo-courants, donc de supprimer le DC (mode commun) et de détecter la partie AC (signal de battement).

La partie AC est généralement amplifiée en externe par un amplificateur trans-impédance (TIA) avant d'être traitée par une électronique externe, par exemple un oscilloscope, pour mesurer la fréquence.

La technique lidar FMCW est une technique de mesure hétérodyne optique (c.a.d. qui met en jeu plusieurs fréquences optiques). La technique est très peu sensible à la lumière ambiante parasite comme par exemple la lumière du soleil.

Pour faire une image complète de la scène, le lidar scanne séquentiellement la scène à l'aide d'un dispositif de balayage (image de type « rolling shutter »).

En pratique, il est difficile d'accéder à une acquisition des images de distance à cadence vidéo (typiquement 50Hz) pour des images de haute résolution (par exemple VGA ou XGA) car le temps disponible pour la mesure de distance en chaque point est très court.

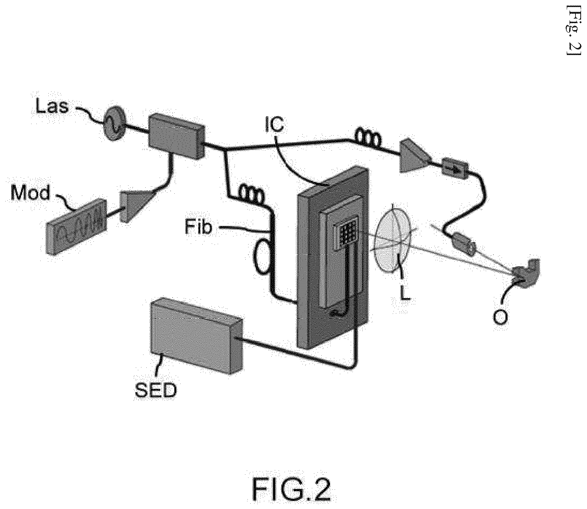

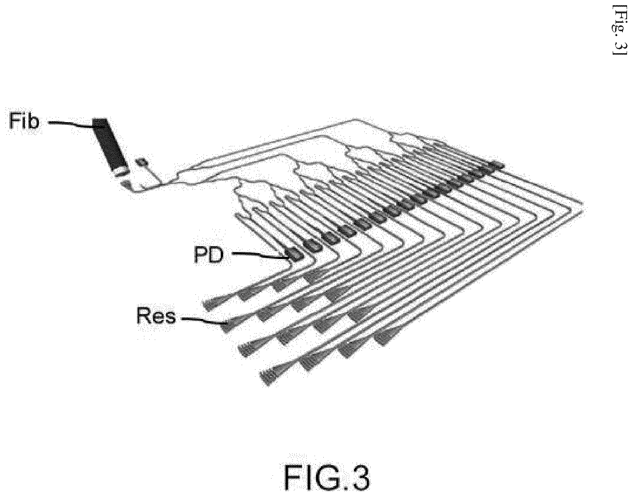

Au lieu de faire des mesures point par point, la publication Aflatouni « Nano photonic coherent imager » (2015, Optics Express vol. 23 n°4, 5117), qui utilise également la technique FMCW, décrit un dispositif dans lequel toute la scène est illuminée simultanément par le faisceau laser qui a été rendu divergent, et la photo-détection est faite en parallèle pour l'ensemble de la scène. Dans cette publication (voir figure 2), la source laser Las est modulée en fréquence par un modulateur Mod, la voie objet illumine l'objet à analyser O et une lentille L forme l'image de l'objet sur un imageur cohérent IC réalisé en optique intégrée, plus précisément sur une matrice de 4x4 réseaux de couplage optique Res. Chaque réseau Res envoie la lumière couplée vers une photodiode PD à couplage latéral située en dehors de l'image, via un guide d'onde (voir figure 3). La voie de référence est directement envoyée sur les photodiodes par une fibre optique Fib et par un réseau de guides d'ondes et de jonctions Y. La conversion du photocourant en tension est réalisée par un amplificateur trans-impédance TIA pour chacune des 16 photodiodes. Le filtrage électronique et le traitement des signaux sont effectués à l'extérieur de la puce dans un système électronique de détection SED.

Cette technique de détection de toute la scène en parallèle est plus appropriée en principe pour augmenter la cadence d'acquisition des images de distance.

Cependant, dans l'architecture de l'imageur décrit dans la publication Aflatouni, la configuration de l'imageur cohérent n'est pas facilement extensible à un grand nombre de pixels. Il faudrait 2N guides d'onde (N pour la voie référence et N pour la voie objet) pour N pixels, c'est-à-dire 2 millions de guides pour un imageur à 1000x1000 pixels, ce qui pose de gros problèmes de routage et de surface occupée. Pour augmenter artificiellement le nombre de pixels effectif de leur imageur, les auteurs recourent à la technique des prises de vue multiples avec translations mécaniques successives de l'imageur, ce qui n'est pas adapté à des scènes en mouvement.

Un autre problème intrinsèque à l'imagerie cohérente et au lidar provient de la nature cohérente de la lumière rétrodiffusée par la scène à observer. Du fait de cette cohérence, la lumière rétrodiffusée présente de manière connue une structure granulaire dénommée speckle. Au niveau de la détection, l'image de l'objet dans le plan du capteur est entachée de grains de speckle, dont la taille latérale vaut statistiquement :

$$\Phi g = 2.\lambda.f\#$$

avec f# = f/D où f est la focale de l'objectif d'imagerie et D le diamètre de sa pupille de sortie.

Ainsi pour le Lidar décrit dans la publication précitée, les battements dus à l'interférence entre la voie de référence et la voie objet affectée par le speckle sont de même fréquence mais déphasés aléatoirement entre des grains de speckle voisins.

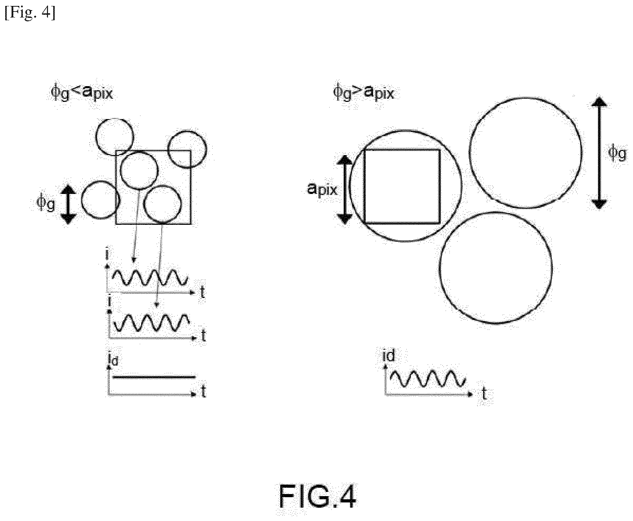

Si les pixels (c'est-à-dire les réseaux récupérant la lumière) présentent une dimension $a_{pix}$ supérieure à celle des grains de speckle $\Phi g$, tel qu'illustré figure 4 à gauche, l'amplitude des oscillations résultantes est atténuée et peut devenir non détectable. Compte tenu de la taille des réseaux de diffraction indiquée ($17\times17\mu m$) et la longueur d'onde de $1.55\mu m$, il faudrait un grand nombre d'ouverture (f# > 6) pour avoir des grains de speckle plus gros que les pixels. Cependant, une telle optique peu ouverte n'est pas favorable à la détection d'objets peu réfléchissants ou situés à des distances importantes, qui vont donner des flux de photons rétro-diffusés très faibles; cela implique en contrepartie d'utiliser une source laser plus puissante donc à plus forte consommation électrique ou risquant de dépasser les limites de la sécurité oculaire. Ainsi pour une optique ouverte permettant la capture d'un plus grand nombre de photons la taille des grains de speckle à la longueur d'onde de sécurité oculaire $1.55\mu m$ est typiquement inférieure à celle de la surface collectrice de lumière d'un pixel, ce qui pose des problèmes de détection.

Lorsque le détecteur détecte uniquement la lumière rétrodiffusée (imagerie cohérente sans battement), l'existence de ces grains, répartis de manière aléatoire, pose également des problèmes de détection car ces grains ne sont pas a priori positionnés de manière optimale vis-à-vis de la surface sensible du détecteur élémentaire du pixel, ce qui diminue la sensibilité du système.

Un but de la présente invention est de remédier aux inconvénients précités en proposant un détecteur intégré pour imagerie cohérente ou lidar cohérent compatible d'un grand nombre de pixels et permettant une détection optimale de la lumière rétrodiffusée entachée de grains de speckle de petite taille.

## DESCRIPTION DE L'INVENTION

La présente invention a pour objet un dispositif de détection pour système d'imagerie cohérente comprenant :

- un détecteur (Det) comprenant une matrice de pixels (P), chaque pixel (P) comprenant un composant photo-détecteur (PD) présentant une surface photosensible (Sph), le détecteur étant adapté pour être illuminé par un faisceau cohérent dit faisceau image (Lo,rim) constitué de grains de lumière dits grains de speckle (SG),
- une matrice d'éléments de déviation (DE) transmissifs disposée du côté de l'illumination par le faisceau cohérent, un élément de déviation étant associé à un groupe de pixel(s) comprenant au moins un pixel, et configuré pour être orientable individuellement par un signal électrique, de manière à dévier une fraction du faisceau image incident sur ledit groupe, et ainsi modifier la répartition spatiale des grains de speckle dans le plan de la surface photosensible,
- chaque groupe de pixel(s) comprenant en outre une boucle d'asservissement (SL) associée à l'élément de déviation et configurée pour actionner l'élément de déviation de manière à optimiser le signal ou le ratio signal sur bruit issu de la lumière détectée par le ou les composant(s) photo-détecteur(s) dudit groupe de pixels, la boucle d'asservissement comprenant un circuit d'asservissement (SLC).

Selon un mode de réalisation l'élément de déviation est choisi parmi un prisme, un polyèdre, une calotte sphérique, un élément optique diffractif. Selon un mode de réalisation chaque élément de déviation comprend au moins deux électrodes en regard respectivement d'au moins deux électrodes disposées à la surface du détecteur, l'actionnement de l'élément de déviation s'opérant de manière électrostatique par application de tensions électriques aux électrodes, et selon au moins un axe de rotation parallèle au plan du détecteur.

Selon un mode de réalisation un élément de déviation est associé à un groupe de n x m pixels, l'asservissement s'effectuant à partir des n x m signaux détectés par les composants photo-détecteurs desdits pixels du groupe, selon un critère d'optimisation.

Selon une variante le détecteur comprend en outre une matrice de zones de couplage disposée entre la matrice d'éléments de déviation et le composant photodétecteur, une zone de couplage étant associée à un pixel et configurée pour former une ouverture au travers de laquelle le faisceau image illumine le composant photo-détecteur du pixel associé, une dimension de l'ouverture étant inférieure à une dimension de la surface photosensible du pixel.

Selon un mode de réalisation une distance entre la matrice d'éléments de déviation et le détecteur est comprise entre une à dix fois une dimension de l'élément de déviation.

Selon un autre aspect l'invention concerne un système d'imagerie cohérente comprenant :

- une source laser configurée pour émettre un rayonnement laser vers une scène à observer,
- un dispositif de détection (10) selon l'invention
- un système optique d'imagerie (Im1) réalisant une image de la scène en focalisant un faisceau réfléchi par la scène sur le détecteur, formant ledit faisceau image .

L'invention concerne également un système d'imagerie lidar cohérent comprenant :

- une source laser (SL) configurée pour émettre un rayonnement laser (L) avec une fréquence optique ($F_L$) modulée temporellement,
- un système optique de séparation/recombinaison (SSR) comprenant au moins :
  - un système optique séparateur (LS) adapté pour séparer spatialement le rayonnement laser (L) en un faisceau dit faisceau de référence ($L_{ref}$) et en un faisceau dit faisceau objet ($L_o$) dirigé vers la scène à observer (Obj) ;
  - un système optique de recombinaison (SR) adapté pour superposer spatialement le faisceau de référence ($L_{ref}$) au faisceau réfléchi par ladite scène ($L_{o,r}$), de manière à former un faisceau recombiné ($L_{rec}$),
- un dispositif de détection (10) selon l'invention,
- un système optique d'imagerie (Im) présentant un axe optique (AO) et réalisant une image de la scène en focalisant un faisceau réfléchi par la scène (Lo,r) sur le détecteur, formant ledit faisceau image (Lo,rim),
  le système optique de séparation/recombinaison (SSR) et le système optique d'imagerie (Im) étant configurés de sorte que chaque pixel du détecteur reçoive une portion du faisceau image (Lo,rim) et une portion du faisceau de référence (Lref), et que lesdites portions soient superposées spatialement de manière cohérente sur chaque pixel,
- le système d'imagerie lidar cohérent comprenant en outre au moins un circuit électronique de traitement (PC) configuré pour calculer, pour chaque pixel, une fréquence (F(i,j)) d'un battement de la portion du faisceau image avec la portion du faisceau de référence illuminant ledit pixel,
- une unité de traitement (UT) reliée à la source laser et au dispositif de détection et configurée pour déterminer une distance de points de la scène imagés sur lesdits pixels, à partir de la fréquence de battement calculée et associée à chaque pixel et à partir de la fréquence optique modulée du rayonnement laser, ledit circuit électronique de traitement étant localisé dans le détecteur et/ou dans l'unité de traitement.

Selon un mode de réalisation le système optique de séparation/recombinaison est en outre configuré pour former une image intermédiaire virtuelle ou réelle du faisceau de référence dans un plan perpendiculaire audit axe optique, dit plan image intermédiaire, ledit plan intermédiaire étant disposé de manière à générer des franges en teinte plate, obtenues par interférence entre lesdites portions, sur chaque pixel éclairé.

Selon un mode de réalisation le système optique de séparation/recombinaison est configuré de manière à ce que le plan image intermédiaire soit confondu avec un plan comprenant une pupille ou un diaphragme dudit système optique d'imagerie.

Selon une variante le système optique séparateur comprend un circuit d'optique intégré, dit premier circuit d'optique intégré, dans lequel ledit rayonnement laser est couplé, au moins un guide d'onde dudit premier circuit intégré guidant ledit faisceau de référence, le premier circuit optique intégré comprenant en outre une pluralité de guides d'onde comprenant chacun au moins un réseau de diffraction, dit réseau objet, de manière à former le faisceau objet.

Selon une variante le système optique de recombinaison comprend un circuit d'optique intégré, dit deuxième circuit d'optique intégré , dans lequel ledit faisceau de référence est couplé au moyen d'un élément optique, le deuxième circuit optique intégré comprenant au moins un guide d'onde comprenant au moins un réseau de diffraction dit réseau référence, le réseau de référence couplant le faisceau de référence vers l'espace libre et vers le système d'optique d'imagerie, le deuxième circuit d'optique intégré étant agencé dans ledit plan image intermédiaire de manière à ce que le réseau de référence forme l'image intermédiaire.

Selon un mode de réalisation l'élément optique est une fibre optique, guidant ledit faisceau de référence issu du premier circuit optique intégré vers ledit deuxième circuit d'optique intégré.

Selon une autre variante le système optique de séparation/recombinaison comprend un circuit d'optique intégré, dit troisième circuit intégré, dans lequel ledit rayonnement laser est couplé, ledit circuit d'optique intégré comprenant le système optique séparateur et ledit système optique de recombinaison.

Selon une autre variante le système optique de séparation/recombinaison comprend en outre un système optique intermédiaire, agencé après le système optique séparateur, et avant le système optique de recombinaison, le système optique intermédiaire étant adapté pour focaliser le faisceau de référence et former ladite image intermédiaire.

Selon un mode de réalisation une ouverture numérique du système optique d'imagerie et une longueur d'onde du faisceau laser étant déterminés de sorte qu'une dimension latérale desdits grains de speckle est inférieure ou égale à une dimension de la surface photosensible d'un pixel et supérieure ou égale à une dimension de la zone de couplage, le cas échéant.

La description suivante présente plusieurs exemples de réalisation du dispositif de l'invention: ces exemples sont non limitatifs de la portée de l'invention. Ces exemples de réalisation présentent à la fois les caractéristiques essentielles de l'invention ainsi que des caractéristiques additionnelles liées aux modes de réalisation considérés.

L'invention sera mieux comprise et d'autres caractéristiques, buts et avantages de celle-ci apparaîtront au cours de la description détaillée qui va suivre et en regard des dessins annexés donnés à titre d'exemples non limitatifs et sur lesquels :

[Fig 1] La figure 1 déjà citée illustre le principe d'un lidar à modulation de fréquence FMCW.

[Fig 2] La figure 2 déjà citée illustre une architecture FMCW partiellement intégrée selon l'état de l'art.

[Fig 3] La figure 3 déjà citée illustre la recombinaison cohérente réalisée par le système décrit figure 2.

[Fig 4] La figure 4 déjà citée illustre deux cas de géométrie du speckle par rapport à un pixel d'un détecteur, la figure de gauche correspond à des grains de speckle inférieurs à la dimension du pixel et la figure de gauche correspond à des grains de speckle supérieurs à la dimension du pixel.

[Fig 5] La figure 5 illustre le principe du dispositif de détection pour système d'imagerie cohérente selon l'invention.

[Fig 6] La figure 6 illustre la manière selon laquelle la matrice d'éléments de déviation modifie globalement la topographie du champ de speckle du faisceau d'illumination dans le plan du pixel.

[Fig 7] La figure 7 illustre trois exemples de réalisation d'élément de déviation présentant un mode d'actionnement électrostatique.

[Fig 8A] La figure 8A illustre un élément de déviation en forme de prisme pouvant pivoter autour d'un axe horizontal.

[Fig 8B] La figure 8B illustre un élément de déviation en forme de polyèdre en toit pouvant pivoter autour de deux axes horizontaux.

[Fig 9] La figure 9 illustre une variante du dispositif de détection selon l'invention comprenant en outre une matrice de zones de couplage disposée entre la matrice d'éléments de déviation et le composant photo-détecteur.

[Fig 10] La figure 10 illustre comment les éléments de déviation et la zone de couplage permettent de sélectionner un seul grain de speckle et de le positionner au mieux pour sa détection par le photo-détecteur.

[Fig 11A] La figure 11A illustre un mode de réalisation de détecteur de type « back side ».

[Fig 11B] La figure 11B illustre un mode de réalisation de détecteur de type « front side ».

[Fig 12] La figure 12 illustre un système d'imagerie cohérente selon l'invention.

[Fig 13] La figure 13 illustre système d'imagerie lidar selon l'invention.

[Fig 14] La figure 14 schématise une coupe verticale et horizontale schématique du dispositif de détection selon l'invention et illustre l'effet des éléments de déviation sur le champ de speckle dans le cas du lidar selon l'invention

[Fig 15] La figure 15 illustre le flux de photons qui atteint un photo-récepteur.

[Fig 16] La figure 16 illustre trois exemples simples et schématiques de répartition des sections du faisceau de référence, du faisceau image et de la zone de couplage.

[Fig 17] La figure 17 illustre l'optimisation de l'amplitude du signal AC détecté par le photorécepteur grâce à l'élément de déviation DE.

[Fig 18] La figure 18 illustre un premier mode de réalisation d'une première variante du lidar de l'invention (optique guidée).

[Fig 19] La figure 19 illustre un deuxième mode de réalisation de la première variante du lidar de l'invention (optique guidée).

[Fig 20] La figure 20 illustre une deuxième variante du lidar de l'invention (optique intermédiaire en espace libre).

## DESCRIPTION DETAILLEE DE L'INVENTION

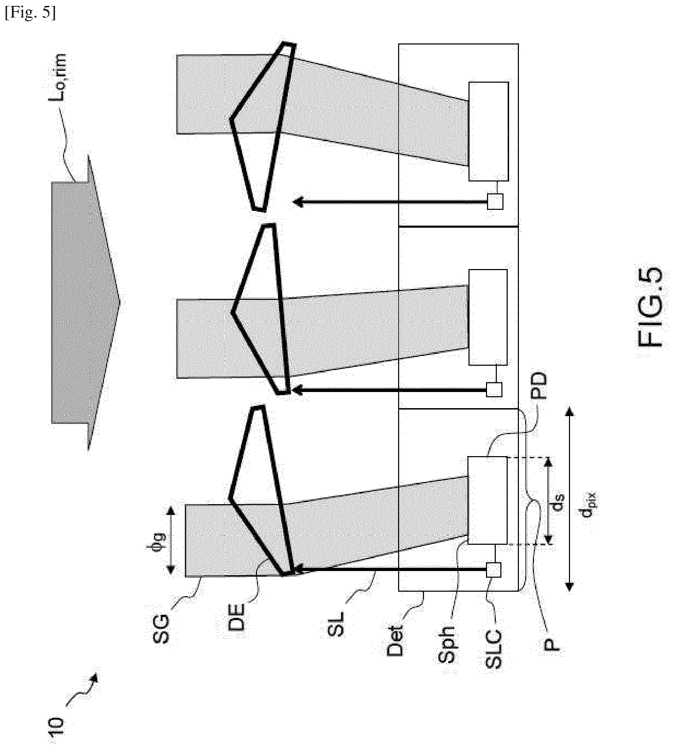

La figure 5 illustre le principe du dispositif de détection 10 pour système d'imagerie cohérente selon l'invention. Le dispositif 10 comprend un détecteur Det comprenant une matrice de pixels P, chaque pixel P comprenant un composant photo-détecteur PD présentant une surface photosensible Sph. Typiquement la taille d'un pixel dpix est de quelques microns à quelques dizaines de microns. Préférentiellement dpix est compris entre 3 $\mu$m et 25 $\mu$m.

Comme chaque pixel comprend son propre détecteur, on peut accéder à un grand nombre de pixels sans problèmes de routage et d'encombrement par de multiples guides d'onde, contrairement à la publication Aflatouni décrite précédemment.

Le dispositif de détection est destiné à être intégré dans un système d'imagerie cohérente ou dans un lidar, et est donc adapté pour être illuminé par un faisceau cohérent dit faisceau image Lo,rim constitué de grains de lumière dits grains de speckle SG comme expliqué plus haut.

Typiquement un pixel comprend également de manière connue un circuit électronique de lecture et de prétraitement du signal détecté par le photodétecteur, le prétraitement comprenant une amplification et un filtrage.

Le dispositif 10 comprend également une matrice d'éléments de déviation DE transmissifs disposée du côté de l'illumination par le faisceau cohérent. Un élément de déviation est associé à un groupe de pixel(s) comprenant au moins un pixel. L'élément de déviation DE est configuré pour être orientable individuellement par un signal électrique, de manière à dévier une fraction du faisceau image incident sur le groupe, et ainsi modifier la répartition spatiale des grains de speckle SG dans le plan de la surface photosensible.

Chaque groupe de pixel(s) comprend également une boucle d'asservissement SL associée à l'élément de déviation DE et configurée pour actionner l'élément de déviation de manière à optimiser, préférentiellement maximiser, le signal ou le ratio signal sur bruit issu de la lumière détectée par le ou les composant(s) photodétecteur(s) du groupe de pixels. Ainsi la boucle d'asservissement assure une répartition optimale des grains de speckle par rapport à la surface photosensible Sph.

La boucle d'asservissement comprend un circuit d'asservissement SLC qui, à partir du ou des signaux détectés par les composants photo-détecteurs des pixels du groupe, délivre un signal électrique à l'élément de déviation selon un critère d'optimisation.

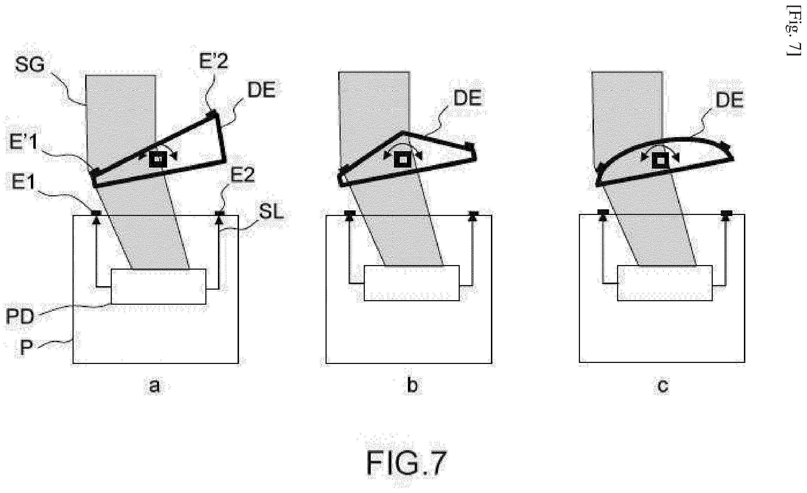

L'élément DE est d'épaisseur non constante, orientable selon un axe ou selon deux axes, ce ou ces axe(s) de rotation étant perpendiculaires au plan de détecteur. Il est préférentiellement choisi parmi un prisme (rotation selon un axe), un polyèdre, une calotte sphérique (voir la figure 7 illustrant ces trois formes), un élément optique diffractif. La taille d'un élément de déviation individuel est celle d'un pixel ou d'un groupe de pixels jointifs, soit en pratique de quelques microns à une centaine de microns.

En imagerie cohérente ou en lidar, le faisceau issu de la scène et incident sur la matrice d'éléments de déviation est un champ de speckle dit subjectif car il s'agit du speckle formé dans l'image d'une scène par un système optique d'imagerie. La taille caractéristique latérale des grains de speckle est $2.\lambda.f\#$, du même ordre de grandeur que la tache d'Airy ou tache de diffraction du système optique, en négligeant les aberrations géométriques du système optique.

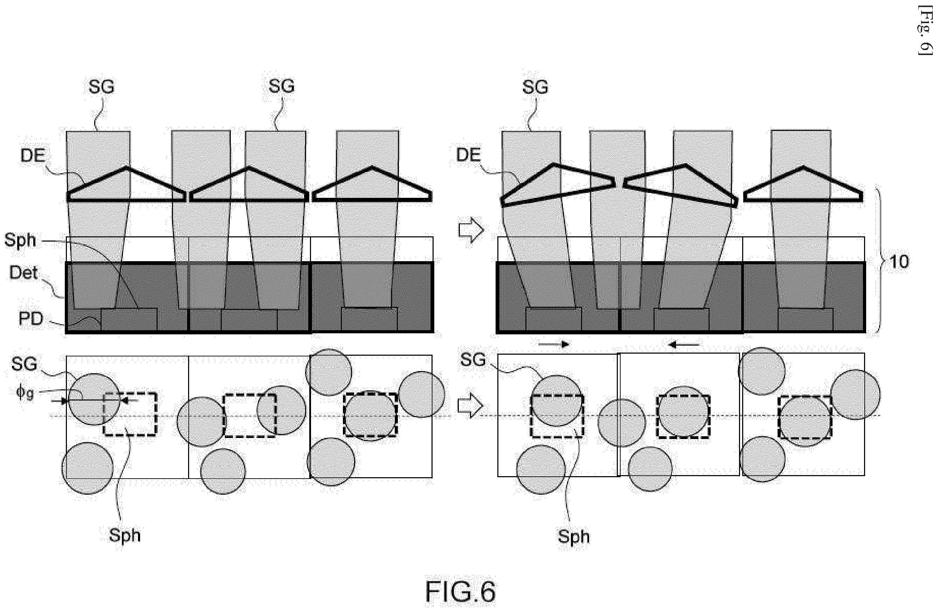

La matrice d'éléments de déviation DE modifie globalement la topographie du champ de speckle du faisceau d'illumination dans le plan du pixel, et notamment la répartition des grains de speckle SG, tel qu'illustré figure 6. Dans cet exemple on a un élément DE par pixel. On note $\Phi g$ le diamètre moyen de la section d'un grain de speckle dans le plan du pixel (c'est-à-dire dans le plan du photodétecteur et de sa surface photosensible), qui reste du même ordre de grandeur qu'en amont de la matrice des éléments de déviation, on a (voir plus haut) : $\Phi g = 2.\lambda.f\#$

Lorsqu'on modifie l'orientation d'un élément de déviation, on modifie également la répartition des grains de speckle dans le plan du pixel et donc la disposition des grains par rapport à Sph permettant de détecter la lumière incidente. On cherche à centrer un gain de speckle sur la surface photosensible de PD. Cette modification du champ de speckle est généralement complexe et difficile à décrire de façon analytique parce que les éléments de déviation opèrent en régime diffractif, c'est à dire que les effets de diffraction liés à leur taille latérale individuelle relativement réduite et à leur organisation en réseau matriciel ne sont pas négligeables.

En pratique, on modifie en aveugle le champ de speckle local à la surface du pixel. On ne connait ni la répartition initiale ni la répartition finale du speckle à la surface du pixel.

Pour une application en imagerie cohérente, on cherche typiquement à optimiser, préférentiellement maximiser, le rapport signal/bruit. C'est le ou les signaux détectés par le ou les photo-détecteurs du groupe qui sert donc de signal d'asservissement pour l'actionnement de l'élément de déviation. Dans le cas d'un élément de déviation pour un groupe de pixels, avec plusieurs signaux détectés, la position de l'élément de déviation est le résultat de l'application d'un critère d'optimisation à ces signaux détectés.

Pour une application Lidar l'actionnement des éléments de déviation vise à augmenter le signal hétérodyne détecté par la photodiode PD. On part du signal AC initial délivré par le photo-détecteur, correspondant au signal de battement du lidar (composante variable du signal détecté). On modifie l'orientation de l'élément de déviation dans un sens : si le signal AC augmente, on continue, et s'il diminue, on l'oriente dans l'autre sens. On recherche un optimum du signal AC, en suivant un algorithme d'optimisation dans un problème à 1 ou 2 dimensions suivant que le nombre d'axes de rotation de l'élément de rotation est 1 ou 2. On peut aboutir à un maximum local, ou absolu, mais en tous cas supérieur à la valeur initiale du signal AC. Si le signal AC est initialement nul ou quasiment nul, on scanne l'espace disponible jusqu'à obtenir un signal. Le signal AC d'oscillations détecté par chaque photo-détecteur sert donc de signal d'asservissement pour l'actionnement de l'élément de déviation: c'est ce signal AC qui est maximisé en actionnant l'élément de déviation. En maximisant le signal AC on maximise le rapport signal sur bruit détecté, c'est-à-dire que l'on augmente le signal hétérodyne et donc on améliore le rendement hétérodyne en limitant l'impact du speckle (voir plus loin pour un calcul détaillé).

Le dispositif de détection 10 selon l'invention permet ainsi d'améliorer la détection de la lumière cohérente entachée de speckle.

Lorsqu'un élément de déviation est associé à un groupe de n x m pixels, l'asservissement s'effectue à partir des n x m signaux détectés par les photo-détecteurs des pixels du groupe, et l'algorithme d'optimisation a n x m entrées. La déviation de l'élément DE correspond alors à un compromis entre les différents pixels du groupe.

L'utilisation d'éléments de déviation telle que décrite figures 5 et 6 est particulièrement adaptée lorsque la dimension des grains de speckle (diamètre moyen $\Phi g$) est inférieure à celle du pixel (dénommé dpix), jusqu'à une dimension de l'ordre de grandeur de celle de la surface Sph du photodétecteur, voire légèrement inférieure. Typiquement Sph est de forme carrée ou rectangulaire, et ds est sa dimension la plus faible.

Ainsi le système dans lequel est intégré le détecteur est dimensionné pour que le diamètre $\Phi g$ du grain SG soit compris entre :

$$ds/2 \leq \Phi g \leq dpix$$

On dénomme facteur de remplissage du pixel la proportion de la surface du pixel qui est photosensible. Ce facteur varie de quelques % à 100% en fonction des technologies, et donc le ratio ds/dpix est très variable en fonction des technologies. La présence d'un élément de déviation est avantageuse lorsque ce ratio est compris entre quelques % et 85%.

La dimension ds est typiquement de quelques microns à quelques dizaines de microns. Ces dimensions sont compatibles d'une optique d'imagerie relativement ouverte, préférée pour capter un maximum de lumière provenant de la scène. A titre d'exemple, pour $\lambda = 1.55\ \mu m$ et $f\# = 3$ on a $\Phi g \sim 10\ \mu m$.

Lorsque les grains de speckle sont plus petits de sorte que plusieurs grains peuvent coexister sur la surface Sph, cela est préjudiciable pour la détection hétérodyne (voir plus haut). Une variante du dispositif 10 adresse cette situation est sera décrite plus loin.

La figure 7 illustre 3 exemples de réalisation d'élément de déviation présentant un mode d'actionnement électrostatique. La figure 7a illustre un prisme, la figure 7b un polyèdre en forme de toit et la figure 7c une lentille. Le circuit d'asservissement SLC n'est pas représenté.

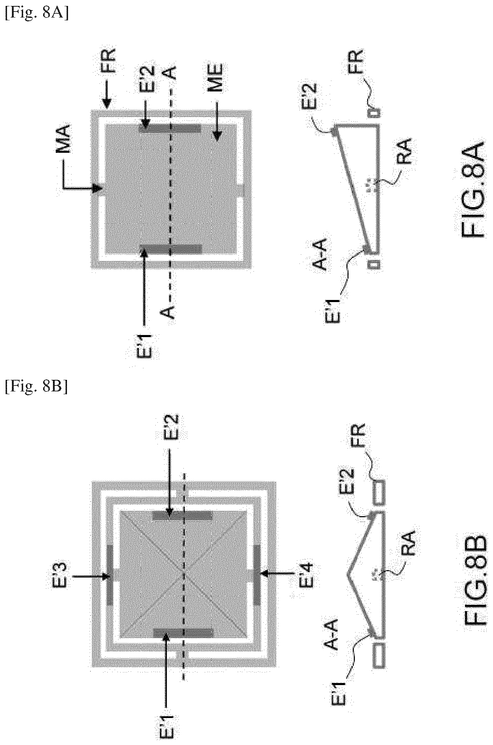

L'élément de déviation se présente en vue de dessus sous la forme d'une planche d'épaisseur non constante pouvant pivoter autour d'au moins un axe horizontal RA, et maintenue sur les côtés par deux bras latéraux MA selon une direction perpendiculaire à cet axe de rotation, tel qu'illustré figure 8A pour un prisme (un axe de rotation) et figure 8B pour un polyèdre en forme de toit. Les bras sont reliés à un cadre fixe et rigide FR sur la périphérie du pixel. Dans le cas de deux axes de rotation, on a deux cadres dont l'un peut pivoter par rapport à l'autre (figure 8B).

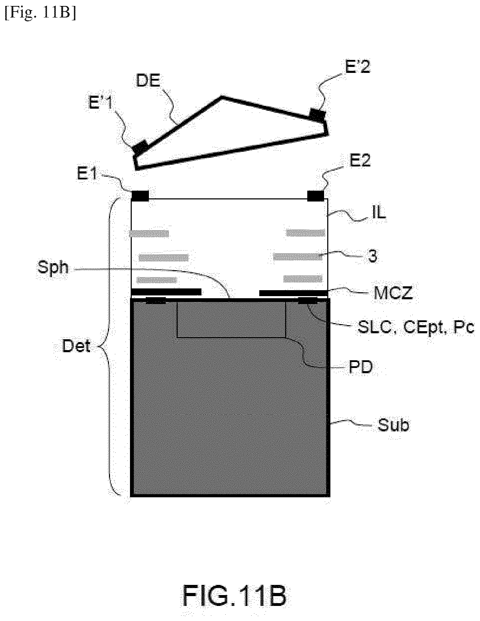

L'actionnement électrostatique utilise un jeu d'électrodes. Chaque élément de déviation comprend au moins deux électrodes E'1, E'2 en regard respectivement d'au moins deux électrodes E1, E2 disposées à la surface du détecteur, l'actionnement de l'élément de déviation s'opérant de manière électrostatique par application de tensions électriques aux électrodes, et selon au moins un axe de rotation parallèle au plan du détecteur. Les électrodes E1 et E2 (et le cas échéant deux électrodes de plus) sont localisées à la surface du pixel en regard des électrodes de l'élément de déviation. Les électrodes E'1, E'2 (et le cas échéant E'3, E'4 voir figure 11B) de l'élément de déviation sont localisées soit sur sa surface supérieure, soit à l'intérieur.

Les électrodes sur le pixel peuvent être au même potentiel, et celles de l'élément de déviation à des potentiels différents, ou l'inverse. L'application des tensions différentes permet de produire des champs électrostatiques de direction verticale et dont le sens permet d'attirer les différentes électrodes entre elles.

Les composants électroniques (circuit SLC) permettant de réaliser l'asservissement de la tension des électrodes peuvent être situés dans le CMOS au même niveau que l'électronique de lecture du pixel, ou d'un pixel du groupe (lorsqu'il y a un élément de déviation pour un groupe de pixels).

Préférentiellement la distance entre la matrice d'éléments de déviation et le détecteur est comprise entre une à dix fois la dimension latérale de l'élément de déviation.

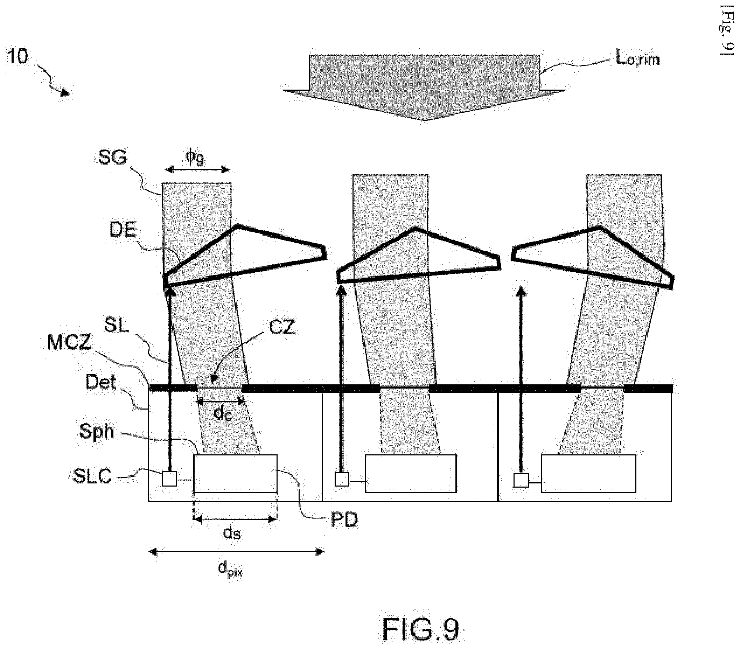

Selon une variante illustrée figure 9 le dispositif de détection 10 comprend en outre une matrice MCZ de zones de couplage CZ disposée entre la matrice d'éléments de déviation et le composant photodétecteur. Une zone de couplage est associée à un pixel et configurée pour former une ouverture au travers de laquelle le faisceau image Lo,rim illumine le composant photo-détecteur du pixel associé. La dimension dc de l'ouverture est inférieure à la dimension ds de la surface photosensible Sph du pixel.

La lumière en provenance de la scène et incidente sur la zone de couplage pénètre dans la couche de photo-détection, alors que la lumière qui tombe en dehors de la zone de couplage n'est pas détectée. A noter que lorsque la zone de couplage est de petite taille, de l'ordre de une à quelques longueurs d'onde, la lumière diffracte en aval de la zone de couplage.

La zone de couplage CZ est par exemple délimitée par un cache (couche d'un matériau opaque à la longueur d'onde de travail).

La zone de couplage CZ d'un pixel est préférentiellement de forme circulaire pour s'adapter au mieux à la forme granulaire du speckle. La dimension de la zone de couplage est telle qu'un seul grain de speckle passe au travers. Soit dc sa dimension caractéristique (diamètre d'un disque, ou côté d'un carré ou diagonale d'un rectangle), préférentiellement on a :

$$d_c \leq \phi_g.$$

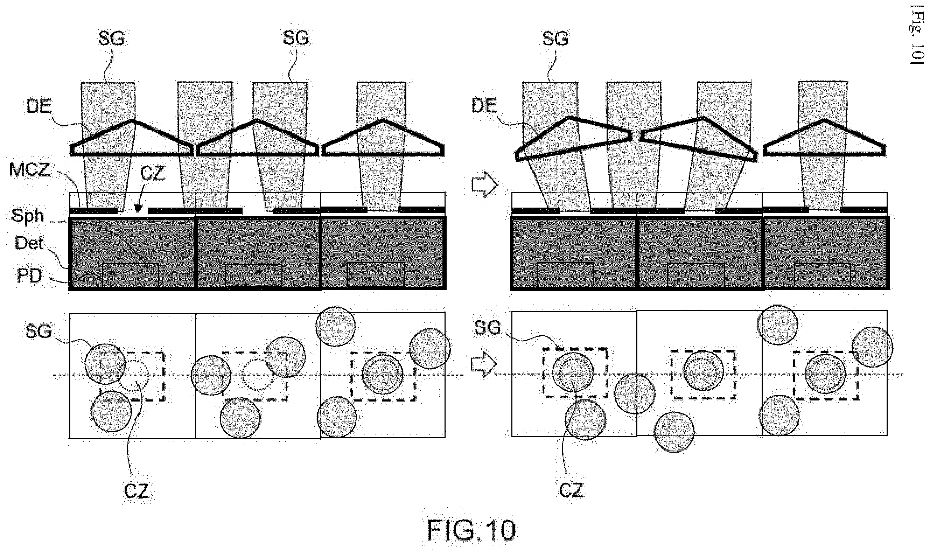

Couplée aux éléments de déviation, la zone de couplage permet de sélectionner un seul grain SG de speckle et de le positionner au mieux pour sa détection par le photo-détecteur, grâce à la boucle d'asservissement, tel qu'illustré figure 10.

La présence de zones de couplage permet de lever la contrainte de la taille de pixel en faisant des pixels plus gros que les grains de speckle, ce qui facilite le design du circuit électronique de détection. Pour une application lidar, l'espace libéré permet également de faciliter le design du circuit électronique de traitement du signal qui calcule de la fréquence de battement, ou permet d'en prévoir un plus sophistiqué (par exemple un circuit de comptage plus précis allant jusqu'à la fraction de période, ou un circuit de mesure simultanée de la distance et de la vitesse longitudinale des objets avec une rampe alternativement montante et descendante) comme déjà démontré dans la littérature du lidar FMCW pour un point donné de la scène.

L'utilisation d'éléments de déviation associés aux zones de couplage telle que décrite figure 9 et 10 est adaptée lorsque la dimension des grains de speckle (diamètre moyen Φg) est inférieure à dpix et supérieure à dc/2 soit :

$$dc/2 \leq \Phi g \leq dpix$$

Lorsque les grains de speckle sont trop petits, le signal détecté est trop faible pour permettre une détection satisfaisante.

Préférentiellement la distance entre la matrice d'éléments de déviation et le dispositif de détection est comprise entre une à dix fois une dimension de l'élément de déviation.

Le détecteur Det est réalisé dans un substrat semiconducteur Sub sur lequel est disposée une couche IL dite d'interconnexion dans un milieu diélectrique, comprenant des interconnexions métalliques IM reliées aux circuits électroniques.

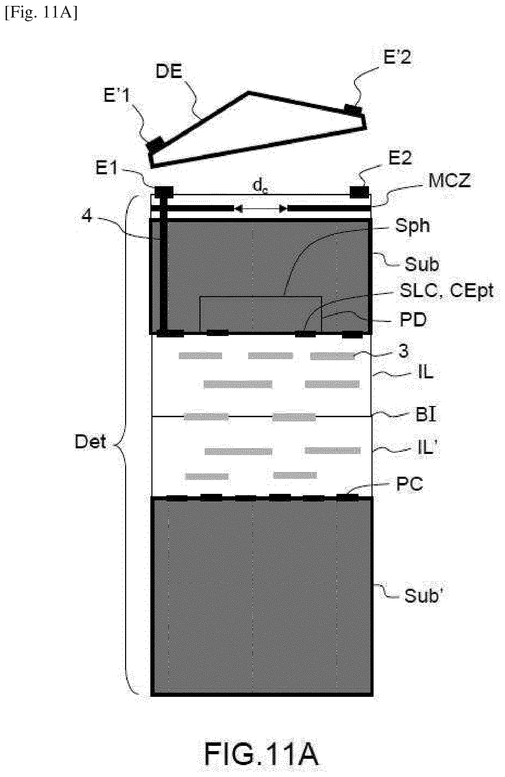

Selon un mode de réalisation préféré le détecteur est de type « back side » (BSI) tel qu'illustré figure 11A.

Dans cette configuration connue en micro-électronique, la lumière est incidente du côté du substrat semi-conducteur Sub (qui est aminci) opposé aux interconnexions métalliques. Dans le cadre de l'invention les circuits électroniques de pilotage, de lecture et de prétraitement du pixel CEpt, ainsi que le circuit d'asservissement SLC, sont préférentiellement situés sur l'interface du substrat semi-conducteur en regard des interconnexions. Des vias 4 traversant le semi-conducteur sont nécessaires pour polariser les électrodes qui font face à l'élément de déviation. La matrice de zones de couplage MCZ est selon l'exemple délimitée par des ouvertures dans une couche métallique ou absorbante spécialement prévue à cet effet disposée sur le substrat côté illumination.

Le substrat aminci est collé sur un substrat support Sub' associé à une couche IL', dans lequel on peut inclure des circuits CMOS (l'imageur est alors dit « 3D stacked »). Ces circuits sont les circuits de traitement PC pour le calcul de fréquence de battement (localisés dans les pixels ou en périphérie du détecteur) et optionnellement une partie ou l'intégralité des circuits CEpt. Le « stacking 3D » permet de décontraindre le design électronique en déportant une partie des circuits, dont au moins le circuit de traitement du signal, dans le substrat support Sub'. Toute la surface du pixel est disponible pour le circuit de traitement qui peut être complexe.

Selon un autre mode de réalisation également classique, dénommé «front side » (FSI) illustré figure 11B, l'illumination s'effectue par la face avant i.e. la face du substrat Sub où sont situées les interconnexions métalliques. Dans cette configuration FSI, tous les circuits électroniques (constitués de transistors, filtres, etc) nécessaires au fonctionnement du détecteur sont formés à la surface du semi-conducteur: circuit de pilotage et de lecture des photodiodes CEpt, circuit d'asservissement SLC, circuit de traitement du signal PC pour la mesure de fréquence des battements. Selon un mode de réalisation la zone de couplage peut être délimitée par les interconnexions métalliques 3 elles-mêmes qui forment une ouverture centrale pour la lumière. Selon un autre mode de réalisation, une couche opaque comportant des ouvertures, par exemple métallique ou absorbante, est disposée au-dessus de la surface du semi-conducteur.

Le détecteur Det est réalisé dans un substrat semi-conducteur, qui peut être différent selon la longueur d'onde d'utilisation : Le semi-conducteur est par exemple le Si pour une longueur d'onde située dans le domaine visible ou proche infra-rouge (longueurs d'onde de 0.4$\mu$m à 1$\mu$m), le Ge ou un semi-conducteur III-V (AsGa, InGaAs, ...) pour les longueurs d'onde de 0.9$\mu$m à 2$\mu$m.

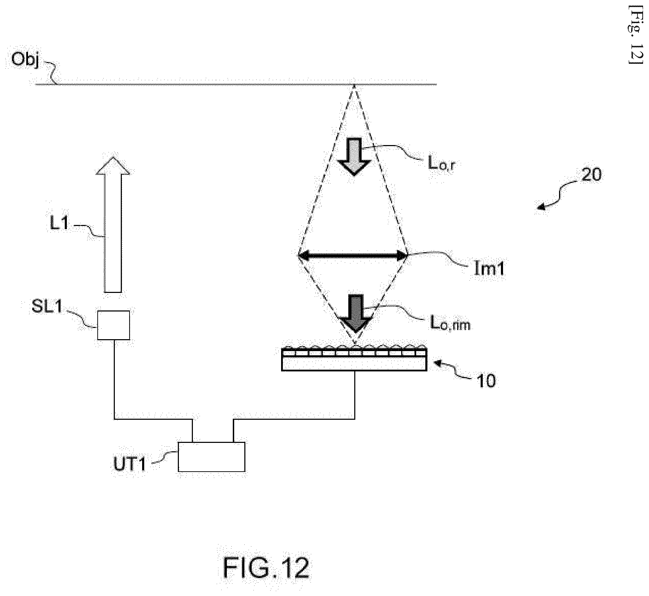

Selon un autre aspect l'invention concerne également un système d'imagerie cohérente (ou active) 20 tel qu'illustré figure 12. Le système 20 comprend une source laser SL1 configurée pour émettre un rayonnement laser L1 vers une scène à observer Obj, un dispositif de détection 10 tel que décrit précédemment et un système optique d'imagerie Im1 réalisant une image de la scène en focalisant un faisceau réfléchi par la scène Lo,r sur le détecteur, formant le faisceau image Lo,rim.

L'utilisation d'un dispositif de détection 10 selon l'invention permet d'améliorer la sensibilité du système.

Pour disposer d'une quantité de lumière suffisante généralement l'illumination est impulsionnelle et le détecteur de la caméra (constituée de l'optique Im et dispositif de détection 10) est synchronisé avec l'émission. Une unité de traitement UT1 reliée à la source laser et au dispositif de détection assure la synchronisation.

Lorsque le détecteur a un temps d'intégration grand, tous les objets de la scène sont imagés sur le détecteur. L'utilisation d'une longueur d'onde adhoc permet par exemple d'imager une scène au travers d'éléments diffusant la lumière visible mais pas la lumière d'illumination ou d'imager une scène de nuit.

Dans un dispositif de type TOF (« time of flight » en anglais) l'éclairement est nécessairement impulsionnel et le détecteur est muni d'un obturateur (éventuellement électronique) synchronisé avec l'émission. Le délai entre le moment où l'on produit l'impulsion laser et le moment où on réalise l'ouverture (puis fermeture) de la caméra (fenêtre temporelle) détermine la distance à laquelle on regarde. En fonction du retard entre émission et réception on peut imager une tranche précise de l'espace.

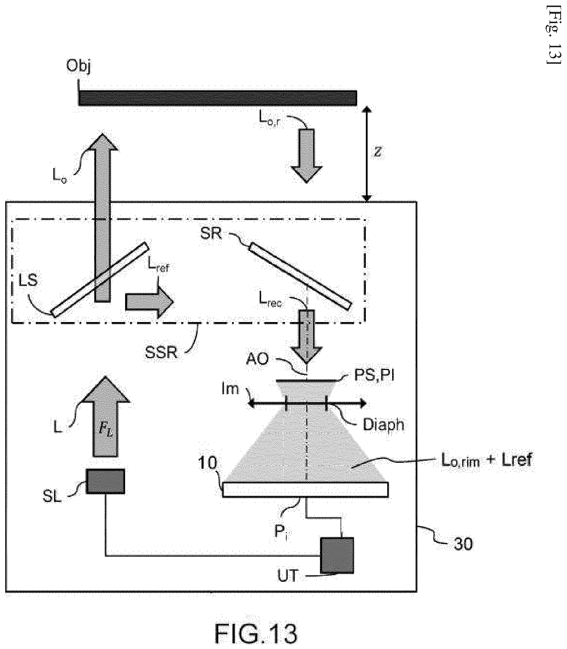

Selon un autre aspect l'invention concerne un système d'imagerie lidar cohérent 30 tel qu'illustré figure 13. Le lidar est de type FMCW et comprend une source laser SL configurée pour émettre un rayonnement laser L avec une fréquence optique FL modulée temporellement. Préférentiellement la fréquence optique est modulée par une rampe périodique d'excursion B et de durée T, et la longueur de cohérence du rayonnement laser est au moins deux fois supérieure à la distance prédéterminée maximale zmax entre la scène à observer et le lidar.

Le lidar 30 comprend également un système optique de séparation/recombinaison SSR qui comprend :

- un système optique séparateur LS adapté pour séparer spatialement le rayonnement laser L en un faisceau dit faisceau de référence Lref et en un faisceau dit faisceau objet Lo dirigé vers la scène à observer Obj,

- un système optique de recombinaison SR adapté pour superposer spatialement le faisceau de référence Lref au faisceau réfléchi par ladite scène Lo,r, de manière à former un faisceau recombiné Lrec.

Le lidar 30 comprend également un dispositif de détection 10 tel que décrit précédemment et un système optique d'imagerie Im d'axe optique AO qui réalise une image de la scène en focalisant un faisceau réfléchi par la scène Lo,r sur le détecteur, formant le faisceau image Lo,rim (on appelle donc Lo,rim la partie du faisceau objet focalisée par l'optique Im). La scène étant typiquement à l'infini, le détecteur det est placé sensiblement dans le plan focal de l'optique Im.

Le système optique de séparation/recombinaison SSR et le système optique d'imagerie Im sont configurés de sorte que chaque pixel du détecteur reçoive une portion du faisceau image Lo,rim et une portion du faisceau de référence Lref, et que les portions soient superposées spatialement de manière cohérente sur chaque pixel.

Le système d'imagerie lidar cohérent 30 comprend en outre au moins un circuit électronique de traitement PC configuré pour calculer, pour chaque pixel P(i,j), une fréquence F(i,j) du battement de la portion du faisceau image avec la portion du faisceau de référence illuminant le pixel.

Enfin le lidar 30 comprend une unité de traitement UT reliée à la source laser et au détecteur Det du dispositif de détection, et configurée pour déterminer une distance de points de la scène imagés sur les pixels, à partir de la fréquence de battement calculée et associée à chaque pixel et à partir de la fréquence optique modulée du rayonnement laser.

Selon un mode de réalisation préféré chaque pixel P(i,j) comprend son propre circuit électronique de traitement PC(i,j) adapté pour calculer la fréquence de battement associée au pixel. Tout le traitement est ainsi réalisé localement sur le pixel, ce qui implique un fort niveau d'intégration au niveau de chaque pixel et un pixel d'une dimension suffisante. Dans cette configuration il est possible de fonctionner en mode « global shutter » c.a.d. que tous les pixels sont traités simultanément. Le niveau d'intégration est ici maximum et permet de minimiser les transferts de données vers les circuits de traitement et donc d'aller à une cadence rapide d'images de distance.

Selon un autre mode de réalisation le traitement s'effectue par ligne, traitement de type « rolling shutter ». Pour cela chaque colonne i est connectée à un circuit électronique de traitement PC(i) configuré pour calculer la fréquence de battement associée à chaque pixel d'une ligne donnée à un instant donné. Une telle architecture limite les contraintes d'intégration dans le pixel, permettant d'en diminuer la taille, tout en réalisant le traitement en local sur la périphérie du détecteur. Dans ce mode de réalisation seul le post traitement d'image est réalisé dans une unité extérieure.

Selon une autre variante la fréquence de battement pour chaque pixel est calculée dans une unité externe.

Ainsi le ou les circuits électroniques de traitement sont localisés dans le détecteur et/ou dans l'unité de traitement extérieure.

La détermination de la fréquence de battement peut s'effectuer de plusieurs manières connues, par exemple par transformée de Fourier ou par comptage du nombre de périodes détectées. Dans ce dernier cas le processeur de UT est configuré pour déterminer la distance z d'un point de la scène associé au pixel Pi, en calculant le nombre N de périodes détectées Te pendant la durée T de la modulation de la fréquence optique à partir du signal représentatif du comptage.

Dans l'invention, il est nécessaire d'éviter la présence de franges d'interférence produites par la superposition cohérente de la portion du faisceau réfléchi détectée Lo,r,i et la portion du faisceau de référence Lref,i détectée, au sein de chaque pixel Pi éclairé. En effet, de telles franges conduiraient à l'atténuation des oscillations résultantes du battement entre les des deux portions car le pixel intègre indifféremment toutes les contributions. Pour éviter l'apparition de ces franges, il est nécessaire que les fronts d'ondes des deux portions soient similaires sur chacun des pixels.

Préférentiellement le système optique de séparation/recombinaison SSR est configuré pour transporter le faisceau de référence de façon cohérente depuis la source laser jusqu'à un plan image intermédiaire PI, perpendiculaire à l'axe optique AO du système optique d'imagerie Im, de façon à réaliser une source de référence cohérente (virtuelle ou réelle) avec le faisceau réfléchi. Le plan intermédiaire PI est situé à proximité du système optique d'imagerie, de manière à générer des franges en teinte plate, obtenues par interférence entre la portion du faisceau réfléchi détectée Lo,r,i et la portion du faisceau de référence détectée Lref,i, sur chaque pixel Pi éclairé. Cette condition de teinte plate implique que, sur chaque pixel Pi, un axe de propagation de la portion Lo,r,i du faisceau réfléchi soit colinéaire ou sensiblement colinéaire à un axe de propagation de portion Lref,i du faisceau de référence. Dans le cas où les faisceaux objet et référence sont approximativement des ondes planes au niveau de chaque pixel Pi et si les directions de propagation de ces deux ondes font un angle $\theta$, le pas des franges sur le capteur étant alors de $\lambda/2\sin\theta$, la condition pour avoir moins d'un interfrange par pixel (teinte plate) se traduit par $\theta<\lambda/(2dpix)$ avec dpix la taille de pixel, soit par exemple $\theta < 7°$ pour $\lambda$ = 1300nm et dpix = 5$\mu$m.

Ledit système optique de séparation/recombinaison SSR est donc configuré pour former une image intermédiaire PS virtuelle ou réelle du faisceau de référence dans le plan image intermédiaire PI, le plan PI étant disposé de manière à générer des franges en teinte plate, obtenues par interférence entre les portions, sur chaque pixel éclairé. Certaines caractéristiques et architectures de ce type de lidar sont décrites dans le document FR 2000408, non publié au jour du dépôt de la présente demande.

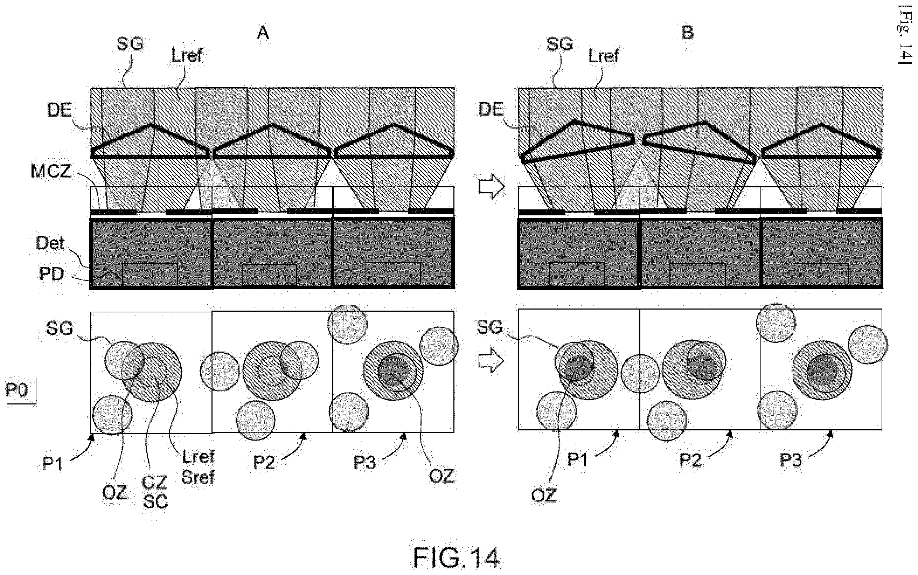

La figure 14 montre une coupe verticale et horizontale schématique du dispositif de détection selon l'invention 10 et illustre l'effet des éléments de déviation sur le champ de speckle dans le cas du lidar 30 selon l'invention, partie A à gauche avant actionnement et partie B droite après actionnement. Le dispositif 10 est éclairé simultanément par le faisceau de référence et le faisceau image issu de la scène. Les grains de speckle dans le plan de la zone de couplage sont distribués aléatoirement et certains d'entre eux tombent en dehors des zones de couplage.

Contrairement au faisceau issu de la scène, le faisceau de référence n'est pas entaché de speckle puisqu'il n'a pas interagi avec une surface rugueuse. Il éclaire de façon approximativement uniforme la matrice d'éléments de déviation qui le transforment en une distribution de taches lumineuses à la surface du photodétecteur ou de la matrice de zones de couplage lorsqu'elle existe. La section du faisceau de référence Lref dans ce plan P0 du photo-détecteur ou de la zone de couplage à l'intérieur d'un pixel est notée Sref, la section d'un grain de speckle SG est notée $S_G$, la section de la zone de couplage CZ est notée Sc et celle du photo-détecteur correspond à Sph. Les explications suivantes traitent du cas dans lequel il existe une zone de couplage mais restent valables sans zone de couplage, en remplaçant la section Sc par la surface Sph (ou la surface de la section de la zone de collection des charges à l'interface supérieure du semi-conducteur pour le cas BSI, dans lequel la photodiode n'affleure pas à la surface supérieure du silicium).

Le faisceau de référence Lref est généralement ausci affecté par l'actionnement des éléments de déviation, et peut s'éloigner de la zone de couplage. Cependant, les déplacements/modifications des faisceaux image et référence à la surface de la zone de couplage sont généralement différents car leur géométrie est différente en entrée de l'élément de déviation. En pratique, la boucle d'asservissement aboutit à un compromis entre le positionnement de chacun des faisceaux focalisés, qui dépend aussi de l'intensité relative des deux faisceaux dans chacun des pixels, afin d'obtenir un optimum du signal AC sur chaque pixel de l'imageur. Lorsque l'élément de déviation est au repos, pas encore actionné, les faisceaux de référence et de la scène forment des taches dans le plan P0 de la zone de couplage. On prend ici un cas où le faisceau de référence est centré sur la zone de couplage. Dans les pixels P1 et P2 de la figure 14 partie A, un grain de speckle SG du faisceau scène a une petite intersection avec le faisceau de référence et avec la zone de couplage, délimité par la surface OZ, définie comme la zone d'intersection entre les trois sections :

$$OZ = Sref \cap Sc \cap S_G.$$

Le pixel P3 est un cas particulier où le grain de speckle est initialement centré sur la zone de couplage.

Les interférences se produisent dans la zone d'intersection entre les deux faisceaux, et seule la partie de cette zone qui est incluse dans la zone de couplage permet de générer un signal d'oscillations détecté par le photorécepteur. Pour les deux pixels P1 et P2 le signal AC est donc de faible amplitude.

L'élément de déviation est alors être orienté de façon à augmenter l'intersection des trois surfaces, Sref, Sc, $S_G$ pour maximiser le signal AC comme illustré dans la partie B, et on obtient pour tous les pixels une surface OZ optimisée.

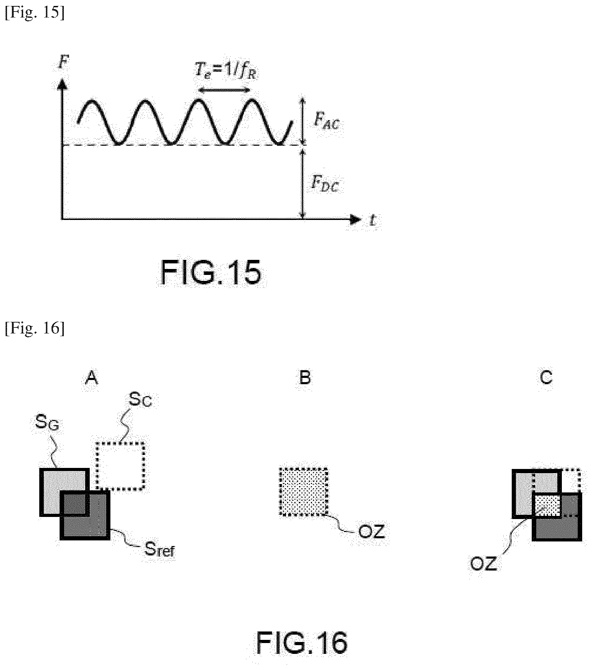

Le flux de photons qui atteint un photo-récepteur est rappelé figure 15 et peut s'écrire sous la forme :

$$F = F_{DC} + F_{AC}cos^2(\pi f_R t + \varphi)$$

$F_{DC}$ composante continue et $F_{AC}$ composante d'amplitude modulée à la fréquence, $f_R = \frac{2Bz}{cT}$ avec z la distance recherchée et c la vitesse de la lumière. avec les hypothèses suivantes :

- on considère un système d'imagerie FMCW où la modulation de fréquence optique du laser est une rampe linéaire périodique d'amplitude B et de période T,
- on néglige pour simplifier la modulation d'intensité du laser qui accompagne généralement la modulation de fréquence optique pour un laser semi-conducteur dont on module le courant d'injection,
- on suppose que l'intensité des deux faisceaux est constante à l'intérieur de leurs sections respectives Sref et $S_G$.

On démontre en effectuant le calcul d'interférence que l'amplitude des oscillations $F_{AC}$ est proportionnelle à la quantité $\frac{S_G \cap S_{ref} \cap S_c}{S_c}$ qui est une fonction sans unité pouvant varier entre 0 et 1. On peut illustrer son impact sur $F_{AC}$ dans trois exemples simples et schématiques illustrés figure 16 où les faisceaux ont des intensités et des sections égales à la zone de couplage:

Cas A : les faisceaux ont une superposition non nulle mais ne s'intersectent pas dans la zone de couplage, donc $\frac{S_G \cap S_{ref} \cap S_c}{S_c} = 0$ et $F_{AC}$ = 0. On ne mesure aucun signal modulé et on ne peut donc pas mesurer la fréquence des battements.

Cas B : les faisceaux sont parfaitement superposés entre eux et avec la zone de couplage, donc $\frac{S_G \cap S_{ref} \cap S_c}{S_c} = 1$, ce qui maximise l'amplitude de $F_{AC}$

Cas C : les faisceaux se superposent sur ¼ de leur surface et cette intersection est située à l'intérieur de la zone de couplage, auquel cas $\frac{S_G \cap S_{ref} \cap S_c}{S_c} =$

0.25 et $F_{AC}$ est à un niveau de ¼ de l'amplitude maximale potentiellement accessible représentée par le cas B.

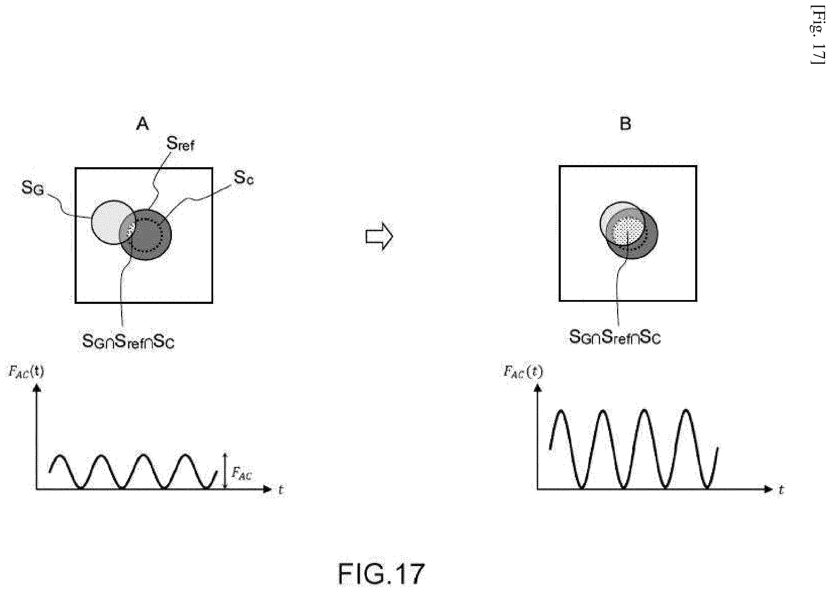

Ainsi en maximisant l'intersection des trois surfaces on optimise l'amplitude du signal AC détecté par le photo-récepteur grâce à l'élément de déviation DE, on facilite grandement la mesure de la fréquence des oscillations (illustré figure 17), par exemple par une méthode de comptage des pics utilisant un comparateur.

Le système d'imagerie Lidar FMCW selon l'invention est :

- compatible d'un grand nombre de pixels pour fournir des images de haute résolution,
- rapide, faisant la mesure des points de la scène en parallèle,
  intégrant au moins une partie de l'électronique de traitement au niveau de l'imageur, idéalement à l'intérieur de chaque pixel, ce qui réduit les flux de données de l'imageur vers un processeur externe et si possible ne fait sortir de l'imageur que les données de distance,
- performant, avec un bon rendement hétérodyne et des petites zones de couplage (ou des petites surfaces photosensibles) pour limiter l'impact du speckle (ce qui est d'autant plus critique que le système optique d'imagerie a une grande ouverture, ceci afin de pouvoir mesurer des objets peu réfléchissants ou assez éloignés).

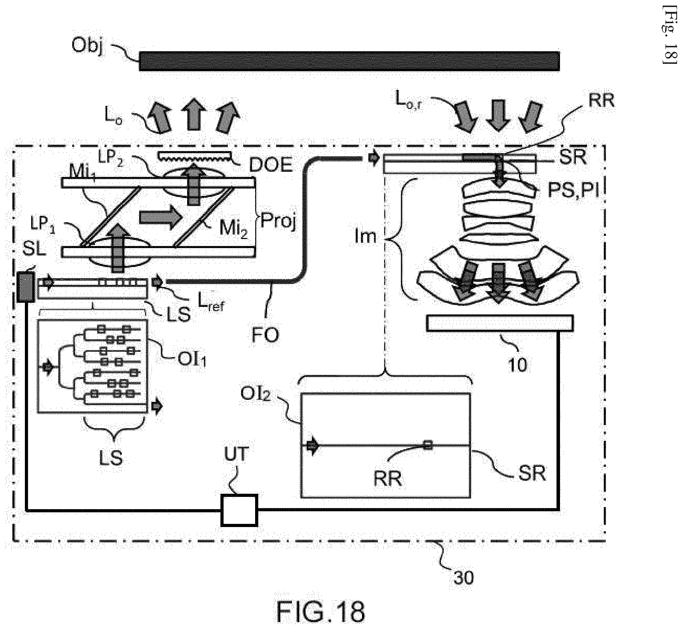

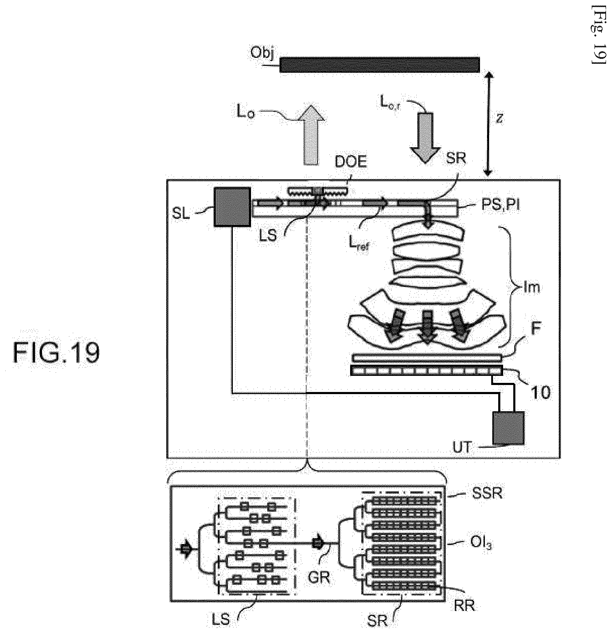

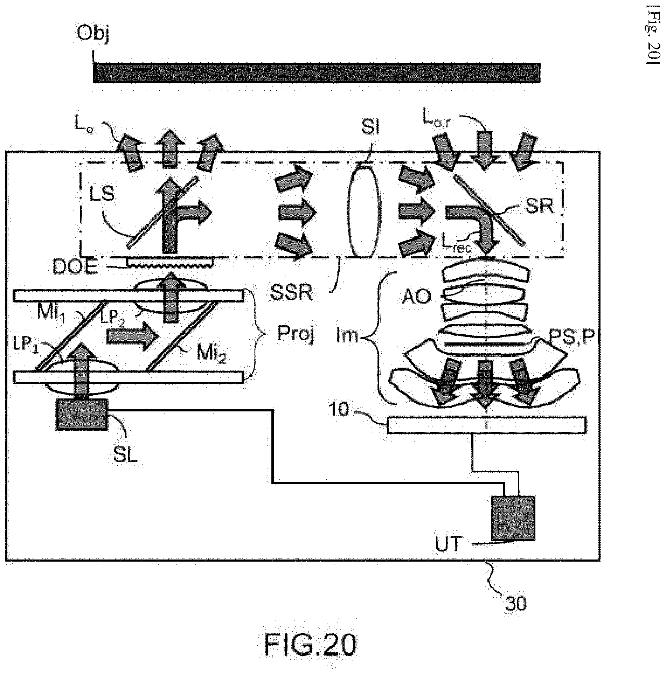

Différentes architectures du lidar 30 selon l'invention, également écrites dans le document FR200408 sont rappelées ci-dessous. Les figures 18 et 19 illustrent une première variante de lidar (optique intégrée) et la figure 20 une deuxième variante (optique intermédiaire en espace libre).

La figure 18 présente un premier mode de réalisation de la première variante du lidar de l'invention, dans lequel le système optique séparateur LS comprend un premier circuit d'optique intégrée $OI_1$ afin de réduire l'encombrement vertical du dispositif. Le rayonnement laser L est couplé dans un guide d'onde réalisé avec un matériau d'indice plus élevé que le substrat du circuit d'optique intégré. Le premier circuit optique intégré $OI_1$ comprend une pluralité de guides d'onde comprenant chacun au moins un réseau de diffraction, dit réseau objet réalisant la séparation des deux voies référence/objet. En effet, les réseaux objets sont adaptés de manière à extraire verticalement (ou plus généralement, extraire hors du plan du circuit OI1) une partie de la lumière du guide d'onde, formant le faisceau objet, l'autre partie continuant sa propagation dans au moins un guide d'onde et formant le faisceau de référence $L_{ref}$. Selon une option on utilise une pluralité de réseaux de diffraction ce qui améliore l'uniformité ou permet d'ajuster le front d'onde du faisceau objet, à condition de respecter une condition de phase entre les différents réseaux. Selon une autre option le premier circuit d'optique intégré comprend un seul réseau de diffraction sur un seul guide d'onde.

Selon un mode de réalisation également illustré figure 18, un système optique de projection Proj est prévu pour projeter la lumière sur une zone prédéterminée de la scène à observer dont on va ensuite former l'image sur le détecteur, donc typiquement une zone rectangulaire. De préférence, le système optique de projection éclaire la scène selon un cône d'ouverture angulaire sensiblement égale à l'angle de champ du système optique d'imagerie (qui est déterminé par sa distance focale et la taille de l'imageur). Ainsi, quelle que soit la distance de la scène, son image correspond à la taille de l'imageur.

De plus, le système optique de projection est préférentiellement adapté pour éclairer la zone prédéterminée de la scène de façon uniforme pour assurer par la suite un éclairement et un rapport signal sur bruit uniforme sur le détecteur si la scène est lambertienne. Par sensiblement uniforme, on entend ici que l'écart type de l'intensité lumineuse sur la zone prédéterminée de la scène est par exemple inférieur à 25% de la moyenne de l'intensité lumineuse. Selon un mode de réalisation, le système optique de projection Proj comprend un système optique classique à deux étages comprenant une première lentille de collimation $LP_1$, et une seconde lentille $LP_2$ qui fait l'image de la première lentille sur la scène (par exemple, la première lentille est approximativement au foyer objet de la seconde lentille pour s'affranchir de l'image de la source sur la scène qui est quasiment à l'infini). La source laser SL est au foyer objet de la lentille de collimation $LP_1$. Dans le mode de réalisation de la figure 18, le système de lentilles est replié pour réduire l'encombrement vertical du système de projection et comprend donc deux miroirs à 45° $Mi_1$, et $Mi_2$.

La figure 18 illustre également un mode de réalisation dans lequel le lidar 30 comprend un dispositif optique de mise en forme DOE (Diffractive Optical Element) constitué de motifs périodiques avec une période de l'ordre de la longueur d'onde du rayonnement laser qui est agencé après le système de projection afin de permettre d'améliorer l'uniformité de cette illumination. Alternativement, selon un autre mode de réalisation, le dispositif optique de mise en forme peut être omis ou peut être remplacé par le système de projection Proj. Le système de projection et le dispositif optique de mise en forme peuvent être utilisés seuls ou en combinaison dans tous les modes de réalisation de l'invention.

La figure 18 représente également une vue schématique d'un système optique de recombinaison SR selon un mode de réalisation l'invention. Dans ce mode de réalisation, le système optique de recombinaison comprend un circuit d'optique intégré $OI_2$, dit deuxième circuit d'optique intégré, afin de réduire l'encombrement vertical du dispositif. Le faisceau de référence $L_{ref}$ est couplé dans le deuxième circuit d'optique intégré au moyen d’un élément optique FO. Le deuxième circuit d’optique intégré comprend au moins un guide d’onde comprenant au moins un réseau de diffraction dit réseau référence RR permettant d’extraire la lumière en direction du détecteur au travers d’au moins une partie du système d’optique d’imagerie Im. Le réseau de référence permet de générer l’équivalent d’un point source constituant l’image intermédiaire PS sur la voie de référence, à proximité du système optique d’imagerie. Ainsi, le deuxième circuit d’optique intégré est agencé dans le plan image intermédiaire PI de manière à ce que le réseau de référence forme (c’est-à-dire constitue) l’image intermédiaire PS.

Selon un mode de réalisation du système optique de recombinaison de la figure 18, le réseau de référence est un réseau de type High Contrast Grating (HCG) qui permet de découpler la lumière préférentiellement d’un seul côté du guide d’onde (sur la figure 18, vers le système optique d’imagerie). Les dimensions latérales du réseau sont réduites (environ quelques longueurs d’onde du rayonnement laser) pour permettre une divergence appropriée du faisceau de référence issu du réseau de référence et un large éclairement de la pupille pour éclairer la totalité du détecteur. La voie objet, elle, ne sera que peu affectée par l’insertion d’un guide d’onde et d’un réseau dans le trajet de la lumière. Le guide d’onde n’est pas situé dans un plan conjugué du capteur d’images donc ne va pas impacter la formation de l’image sur le capteur. Dans le cas où on le positionne à l’intérieur du système optique d’imagerie, le substrat sur lequel est réalisé le guide d’onde peut être inséré entre deux lentilles du système optique d’imagerie Im lorsque ce dernier comprend au moins deux lentilles.

Dans une autre variante la voie de référence est recombinée avec la voie objet par une pluralité de réseaux de diffraction de référence. Selon cette variante il existe une relation de phase entre les réseaux de référence afin qu’ils soient adaptés pour créer un front d’onde sur les pixels du détecteur dont la tangente en chaque point ne fait pas un angle supérieur à $\frac{\lambda}{2d_{pix}}$ par rapport à la tangente du front d’onde du faisceau objet. Pour cela, les guides du circuit $OI_2$ sont monomodes. Selon un mode de réalisation, le circuit $OI_2$ comprend des déphaseurs dans les guides d’onde ou en sortie du réseau référence. Chaque réseau de diffraction se comporte comme une source secondaire. Les réseaux sont disposés régulièrement pour former une matrice de lignes et colonnes, de préférence de même période. De manière préférentielle, la lumière diffractée par l’ensemble des réseaux forme des motifs lumineux régulièrement espacés dans le plan du dispositif 10, avec un motif par pixel. L’avantage d’avoir une pluralité de réseaux de référence est de pouvoir mieux répartir les motifs lumineux, mieux contrôler l’uniformité de l’éclairage du détecteur par les points sources secondaires et de mieux ajuster le front d’onde du faisceau de référence par rapport au front d’onde du faisceau objet sur le détecteur Det. Le contraste d’indice des réseaux et des guides qui alimentent les réseaux restant faible, et les réseaux n’étant pas imagés sur le détecteur, la voie objet n’est pas ou peu impactée par la traversée en transmission de ces réseaux.

Alternativement, selon un autre mode de réalisation, le faisceau de référence guidé est découplé en direction de l’espace libre vers le système optique d’imagerie à l’aide d’une lame semi-réfléchissante comprise dans le guide d’onde et orientée à 45° de l’axe de propagation dans le guide d’onde. L’avantage du mode de réalisation avec un réseau est de réduire les pertes de flux sur la voie de référence par rapport au mode de réalisation avec une lame semi-réfléchissante.

Le système de recombinaison de la figure 18 permet de réduire l’épaisseur totale du dispositif puisqu’on remplace un composant micro-optique volumineux (par exemple une lame semi-réfléchissante) dont l’encombrement vertical est approximativement égal au diamètre de la pupille d’entrée du système optique d’imagerie) par un simple substrat d’épaisseur proche ou inférieure au millimètre. Les modes de réalisation du système optique de séparation et du système optique de recombinaison tels que décrits sur la figure 18 peuvent également être utilisés séparément.

La figure 18 illustre également un mode de réalisation dans lequel le couplage $L_{ref}$ dans le deuxième circuit d’optique intégré s’effectue au moyen d’une fibre optique FO. Cette fibre est adaptée pour guider le faisceau de référence issu du premier circuit d’optique intégré $OI_1$ vers le deuxième circuit d’optique intégré $OI_2$. L’utilisation des deux circuits d’optiques intégrés permet de réduire l’encombrement vertical du dispositif.

La figure 19 présente un dispositif d’imagerie selon un deuxième mode de réalisation de la première variante de lidar selon l’invention. Ce deuxième mode de réalisation est proche de celui de la figure 18, à l’exception que le premier circuit d’optique intégré $OI_1$ et le deuxième circuit d’optique intégré $OI_2$ du dispositif de la figure 18 ne forment plus qu’un seul circuit d’optique intégré dénommé troisème circuit intégré $OI_3$, qui comprend alors le système optique séparateur LS et ledit système optique de recombinaison SR. Dans ce mode de réalisation, le système optique de séparation/recombinaison comprend donc le troisième circuit d’optique intégré $OI_3$ dans lequel le rayonnement laser L est couplé. Au moins un guide d’onde du circuit intégré dit guide d’onde référence GR guide le faisceau de référence $L_{ref}$ vers le système de recombinaison SR comprenant au moins un réseau référence RR, situé sur le guide d’onde de référence. Le troisième circuit d’optique intégré $OI_3$ est agencé dans le plan image intermédiaire de manière à ce que le réseau de référence forme l’image intermédiaire PS. Dans l’exemple de la figure 19, illustré à titre non limitatif, le système optique de recombinaison comprend une pluralité de réseaux de référence. Alternativement, selon un autre mode de réalisation, le système optique de recombinaison comprend un seul réseau de référence.

Ce mode de réalisation possède l'avantage d'éviter les pertes de flux provoquées par le couplage/découplage du faisceau de référence dans la fibre optique FO du dispositif de la figure 18. De plus, cette disposition permet de réduire la complexité du système et son encombrement.

La figure 19 illustre également un mode de réalisation dans lequel le lidar comprend un filtre optique F passe bande, placé devant le dispositif 10 ou devant chaque pixel (prévu pour mesurer la distance) du détecteur (par exemple en cas d'acquisition d'images de type RGB-z) et centré sur la longueur d'onde d'émission du laser afin de filtrer une grande partie de la lumière parasite ambiante.

La figure 20 présente une vue schématique du lidar 30 selon une deuxième variante de l'invention. Dans cette deuxième variante, le système de séparation / recombinaison SSR comprend en outre un système optique intermédiaire SI, agencé après le système optique séparateur LS, et avant le système optique de recombinaison SR. Ce système optique intermédiaire SI est adapté pour focaliser le faisceau de référence et former l'image intermédiaire PS dans le plan intermédiaire PI. Selon un mode de réalisation, ce système optique intermédiaire est une lentille ou un ensemble de lentilles et de diffuseurs optiques. Plus précisément, le système optique intermédiaire permet de mettre en forme le faisceau de référence $L_{ref}$ en le faisant converger vers le système optique d'imagerie, de sorte que le faisceau de référence éclaire l'intégralité du détecteur Det du dispositif 10 (en combinaison avec la matrice d'éléments de déviation qui modifie peu le trajet du faisceau de référence), et de manière à ce que les fronts d'onde des faisceaux objet et référence au niveau de chaque pixel soient similaires. Aussi, dans ce mode de réalisation, le système optique séparateur et le système optique de recombinaison peuvent être un cube séparateur ou une lame séparatrice. Dans le mode de réalisation de la figure 20, un assemblage similaire à celui du mode de réalisation de la figure 18, formé d'un système optique de projection Proj et d'un élément optique de mise en forme DOE, permet d'éclairer une zone prédéterminée de la scène de façon sensiblement uniforme.

Alternativement, selon un autre mode de réalisation de cette deuxième variante, l'ensemble formé par le système optique de projection Proj et l'élément optique de mise en forme DOE est placé en aval du système optique séparateur, sur le trajet du faisceau objet.

## Revendications

**1.** Dispositif de détection (10) pour système d'imagerie cohérente comprenant :

- un détecteur (Det) comprenant une matrice de pixels (P), chaque pixel (P) comprenant un composant photo-détecteur (PD) présentant une surface photosensible (Sph), le détecteur étant adapté pour être illuminé par un faisceau cohérent dit faisceau image (Lo,rim) constitué de grains de lumière dits grains de speckle (SG),
- une matrice d'éléments de déviation (DE) transmissifs disposée du côté de l'illumination par le faisceau cohérent, un élément de déviation étant associé à un groupe de pixel(s) comprenant au moins un pixel, et configuré pour être orientable individuellement par un signal électrique, de manière à dévier une fraction du faisceau image incident sur ledit groupe, et ainsi modifier la répartition spatiale des grains de speckle dans le plan de la surface photosensible,
- chaque groupe de pixel(s) comprenant en outre une boucle d'asservissement (SL) associée à l'élément de déviation et configurée pour actionner l'élément de déviation de manière à optimiser le signal ou le ratio signal sur bruit issu de la lumière détectée par le ou les composant(s) photo-détecteur(s) dudit groupe de pixels, la boucle d'asservissement comprenant un circuit d'asservissement (SLC).

**2.** Dispositif de détection selon la revendication précédente dans lequel l'élément de déviation est choisi parmi un prisme, un polyèdre, une calotte sphérique, un élément optique diffractif.

**3.** Dispositif de détection selon l'une des les revendications précédentes dans lequel chaque élément de déviation comprend au moins deux électrodes (E1, E2) en regard respectivement d'au moins deux électrodes (DE1, DE2) disposées à la surface du détecteur, l'actionnement de l'élément de déviation s'opérant de manière électrostatique par application de tensions électriques aux électrodes, et selon au moins un axe de rotation parallèle au plan du détecteur.

**4.** Dispositif de détection selon l'une des revendications précédentes dans lequel un élément de déviation est associé à un groupe de n x m pixels, l'asservissement s'effectuant à partir des n x m signaux détectés par les composants photo-détecteurs desdits pixels du groupe, selon un critère d'optimisation.

**5.** Dispositif de détection selon l'une des revendications précédentes dans lequel le détecteur comprend en outre une matrice (MCZ) de zones de couplage (CZ) disposée entre la matrice d'éléments de déviation et le composant photodétecteur, une zone de couplage étant associée à un pixel et configurée pour former une ouverture au travers de laquelle le faisceau image illumine le composant photodétecteur du pixel associé, une dimension (dc) de l'ouverture étant inférieure à une dimension (ds) de la surface photosensible du pixel.

6. Dispositif de détection selon l'une des revendications précédentes dans lequel une distance entre la matrice d'éléments de déviation et le détecteur est comprise entre une à dix fois une dimension de l'élément de déviation.

7. Système d'imagerie cohérente (20) comprenant :

- une source laser (SL1) configurée pour émettre un rayonnement laser (L1) vers une scène à observer (Obj),
- un dispositif de détection (10) selon l'une des revendications 1 à 6,
- un système optique d'imagerie (Im1) réalisant une image de la scène en focalisant un faisceau réfléchi par la scène (Lo,r) sur le détecteur, formant ledit faisceau image (Lo,rim).

8. Système d'imagerie lidar cohérent (30) comprenant :

- une source laser (SL) configurée pour émettre un rayonnement laser (L) avec une fréquence optique ($F_L$) modulée temporellement,
- un système optique de séparation/recombinaison (SSR) comprenant au moins :

  - un système optique séparateur (LS) adapté pour séparer spatialement le rayonnement laser (L) en un faisceau dit faisceau de référence ($L_{ref}$) et en un faisceau dit faisceau objet ($L_o$) dirigé vers la scène à observer (Obj) ;
  - un système optique de recombinaison (SR) adapté pour superposer spatialement le faisceau de référence ($L_{ref}$) au faisceau réfléchi par ladite scène ($L_{o,r}$), de manière à former un faisceau recombiné ($L_{rec}$),

- un dispositif de détection (10) selon l'une des revendications 1 à 6,
- un système optique d'imagerie (Im) présentant un axe optique (AO) et réalisant une image de la scène en focalisant un faisceau réfléchi par la scène (Lo,r) sur le détecteur, formant ledit faisceau image (Lo,rim),

le système optique de séparation/recombinaison (SSR) et le système optique d'imagerie (Im) étant configurés de sorte que chaque pixel du détecteur reçoive une portion du faisceau image (Lo,rim) et une portion du faisceau de référence (Lref), et que lesdites portions soient superposées spatialement de manière cohérente sur chaque pixel,
- le système d'imagerie lidar cohérent comprenant en outre au moins un circuit électronique de traitement (PC) configuré pour calculer, pour chaque pixel, une fréquence (F(i,j)) d'un battement de la portion du faisceau image avec la portion du faisceau de référence illuminant ledit pixel,
- une unité de traitement (UT) reliée à la source laser et au dispositif de détection et configurée pour déterminer une distance de points de la scène imagés sur lesdits pixels, à partir de la fréquence de battement calculée et associée à chaque pixel et à partir de la fréquence optique modulée du rayonnement laser, ledit circuit électronique de traitement étant localisé dans le détecteur et/ou dans l'unité de traitement.

9. Système selon la revendication précédente dans lequel ledit système optique de séparation/recombinaison (SSR) est en outre configuré pour former une image intermédiaire (PS) virtuelle ou réelle du faisceau de référence dans un plan perpendiculaire audit axe optique, dit plan image intermédiaire (PI), ledit plan intermédiaire étant disposé de manière à générer des franges en teinte plate, obtenues par interférence entre lesdites portions, sur chaque pixel éclairé.

10. Système selon la revendication précédente dans lequel ledit système optique de séparation/recombinaison (SSR) est configuré de manière à ce que le plan image intermédiaire soit confondu avec un plan comprenant une pupille ou un diaphragme dudit système optique d'imagerie (Im).

11. Système selon l'une quelconque des revendications 9 à 10 dans lequel le système optique séparateur (LS) comprend un circuit d'optique intégré, dit premier circuit d'optique intégré (OI1), dans lequel ledit rayonnement laser est couplé, au moins un guide d'onde dudit premier circuit intégré guidant ledit faisceau de référence, le premier circuit optique intégré comprenant en outre une pluralité de guides d'onde comprenant chacun au moins un réseau de diffraction, dit réseau objet, de manière à former le faisceau objet.

12. Système selon l'une des revendications 9 à 11 dans lequel le système optique de recombinaison (SR) comprend un circuit d'optique intégré, dit deuxième circuit d'optique intégré (OI2), dans lequel ledit faisceau de référence est couplé au moyen d'un élément optique (FO), le deuxième circuit optique intégré comprenant au moins un guide d'onde comprenant au moins un réseau de diffraction dit réseau référence (RR), le réseau de référence couplant le faisceau de référence vers l'espace libre et vers le système d'optique d'imagerie, le deuxième circuit d'optique intégré étant agencé dans ledit plan image intermédiaire de manière à ce que le réseau de référence forme l'image intermédiaire (PS).

**13.** Système selon la revendication précédente dans lequel ledit élément optique est une fibre optique (FO), guidant ledit faisceau de référence issu du premier circuit optique intégré vers ledit deuxième circuit d'optique intégré.

**14.** Système selon l'une des revendications 8 à 10 dans lequel le système optique de séparation/recombinaison comprend un circuit d'optique intégré, dit troisième circuit intégré (OI3), dans lequel ledit rayonnement laser est couplé, ledit circuit d'optique intégré comprenant le système optique séparateur (LS) et ledit système optique de recombinaison (SR).

**15.** Système selon la revendication 9 ou 10 dans lequel le système optique de séparation/recombinaison comprend en outre un système optique intermédiaire (SI), agencé après le système optique séparateur (LS), et avant le système optique de recombinaison (SR), le système optique intermédiaire étant adapté pour focaliser le faisceau de référence et former ladite image intermédiaire.

**16.** Système selon l'une des revendications 7 à 15 dans lequel une ouverture numérique (f#) du système optique d'imagerie (Im) et une longueur d'onde ($\lambda 0$) du faisceau laser étant déterminés de sorte qu'une dimension latérale ($\phi g$) desdits grains de speckle (SG) est inférieure ou égale à une dimension (ds) de la surface photosensible d'un pixel et supérieure ou égale à une dimension de la zone de couplage, le cas échéant.

## Patentansprüche

**1.** Detektionsvorrichtung (10) für ein System zur kohärenten Bildgebung, Folgendes umfassend:

- einen Detektor (Det), welcher eine Matrix aus Pixeln (P) umfasst, wobei jeder Pixel (P) eine Fotodetektor-Komponente (PD) umfasst, welche eine lichtempfindliche Oberfläche (Sph) aufweist, wobei der Detektor angepasst ist, um durch einen kohärenten Strahl beleuchtet zu werden, genannt Bildstrahl (Lo,rim), gebildet aus Speckle-Körnern (SG) genannten Lichtkörnern,
- eine Matrix aus durchlässigen Umlenkelementen (DE), welche auf der Seite der Beleuchtung durch den kohärenten Strahl angeordnet ist, wobei ein Umlenkelement einer Gruppe von Pixel(n) zugeordnet ist, welche mindestens einen Pixel umfasst, und konfiguriert ist, um einzeln durch ein elektrisches Signal ausrichtbar zu sein, um einen Teil des auf die Gruppe einfallenden Bildstrahls umzulenken, und so die räumliche Verteilung der Speckle-Körner in der Ebene der lichtempfindlichen Oberfläche zu modifizieren,
- wobei jede Gruppe von Pixel(n) ferner eine dem Umlenkelement zugeordnete und dergestalt konfigurierte Nachführschleife (SL) umfasst, dass das Umlenkelement dergestalt betätigt wird, dass das Signal oder das Signal-zu-Rauschen-Verhältnis, welches aus dem durch die Fotodetektor-Komponente(n) der Pixelgruppe detektierten Licht stammt, optimiert wird, wobei die Nachführschleife eine Nachführschaltung (SLC) umfasst.

**2.** Detektionsvorrichtung nach dem vorhergehenden Anspruch, wobei das Umlenkelement aus einem Prisma, einem Polyeder, einer Kugelkappe und einem optischen Beugungselement ausgewählt ist.

**3.** Detektionsvorrichtung nach einem der vorhergehenden Ansprüche, wobei jedes Umlenkelement mindestens zwei Elektroden (E1, E2) umfasst, welche jeweils mindestens zwei Elektroden (DE1, DE2) gegenüber liegen, welche an der Oberfläche des Detektors angeordnet sind, wobei die Betätigung des Umlenkelements elektrostatisch durch Anlegen von elektrischen Spannungen an die Elektroden erfolgt, und entlang mindestens einer Rotationsachse, welche parallel zur Ebene des Detektors ist.

**4.** Detektionsvorrichtung nach einem der vorhergehenden Ansprüche, wobei ein Umlenkelement einer Gruppe von n x m Pixeln zugeordnet ist, wobei die Nachführung anhand von n x m Signalen, welche durch die Fotodetektor-Komponenten der Pixel der Gruppe detektiert werden, gemäß einem Optimierungskriterium erfolgt.

**5.** Detektionsvorrichtung nach einem der vorhergehenden Ansprüche, wobei der Detektor ferner eine Matrix (MCZ) von Kopplungszonen (CZ) umfasst, welche zwischen der Umlenkelemente-Matrix und der Fotodetektor-Komponente angeordnet ist, wobei eine Kopplungszone einem Pixel zugeordnet und konfiguriert ist, um eine Öffnung zu bilden, durch welche der Bildstrahl die Fotodetektor-Komponente des zugeordneten Pixels beleuchtet, wobei eine Abmessung (dc) der Öffnung kleiner als eine Abmessung (ds) der lichtempfindlichen Oberfläche des Pixels ist.

**6.** Detektionsvorrichtung nach einem der vorhergehenden Ansprüche, wobei ein Abstand zwischen der Umlenkelemente-Matrix und dem Detektor zwischen dem Einfachen und dem Zehnfachen einer Abmessung des Umlenkelements beträgt.

**7.** System zur kohärenten Bildgebung (20), Folgendes umfassend:

- eine Laserquelle (SL1), welche konfiguriert ist, um eine Laserstrahlung (L1) in Richtung einer zu beobachtenden Szene (Obj) auszusenden,
- eine Detektionsvorrichtung (10) nach einem der Ansprüche 1 bis 6,
- ein optisches Bildgebungssystem (Im1), welches ein Bild der Szene erstellt, indem es einen durch die Szene (Lo,r) reflektierten Strahl auf den Detektor fokussiert, wodurch es den Bildstrahl (Lo,rim) bildet.

**8.** Kohärenteres Lidar-Bildgebungssystem (30), Folgendes umfassend:

- eine Laserquelle (SL), welche konfiguriert ist, um eine Laserstrahlung (L) mit einer zeitabhängig modulierten optischen Frequenz ($F_L$) auszusenden,
- ein optisches Splitter-/Rekombinationssystem (SSR), welches mindestens Folgendes umfasst:
- ein optisches Splittersystem (LS), welches angepasst ist, um räumlich die Laserstrahlung (L) in einen als Referenzstrahl ($L_{ref}$) bezeichneten Strahl und in einen als Objektstrahl ($L_o$) bezeichneten Strahl, welcher auf die zu beobachtende Szene (Obj) gerichtet ist, zu splitten;
- ein optisches Rekombinationssystem (SR), welches geeignet ist, um räumlich den Referenzstrahl ($L_{ref}$) mit dem durch die Szene ($L_{o,r}$) reflektierten Strahl zu überlagern, um einen rekombinierten Strahl ($L_{rec}$) zu bilden,
- eine Detektionsvorrichtung (10) nach einem der Ansprüche 1 bis 6,
- ein optisches Bildgebungssystem (Im), welches eine optische Achse (AO) aufweist und ein Bild der Szene erstellt, indem es den durch die Szene (Lo,r) reflektierten Strahl auf den Detektor fokussiert, wodurch es den Bildstrahl (Lo,rim) bildet,

wobei das optische Splitter-/Rekombinationssystem (SSR) und das optische Bildgebungssystem (Im) dergestalt konfiguriert sind, dass jeder Pixel des Detektors einen Teil des Bildstrahls (Lo,rim) und einen Teil des Referenzstrahls (Lref) empfängt, und dass die Teile räumlich in kohärenter Weise auf jedem Pixel überlagert sind,

- wobei das kohärente Lidar-Bildgebungssystem ferner mindestens eine elektronische Verarbeitungsschaltung (PC) umfasst, welche konfiguriert ist, um für jeden Pixel eine Halbschwingungsfrequenz (F(i,j)) des Teils des Bildstrahls mit dem Teil des Referenzstrahls zu berechnen, welcher den Pixel beleuchtet,
- eine Verarbeitungseinheit (UT), welche mit der Laserquelle und der Detektionsvorrichtung verbunden und konfiguriert ist, um einen Abstand von Punkten der Szene zu bestimmen, welche auf den Pixeln abgebildet werden, anhand der Halbschwingungsfrequenz, welche für jeden Pixel berechnet und diesem zugeordnet wird und anhand der modulierten optischen Frequenz der Laserstrahlung, wobei die elektronische Verarbeitungsschaltung in dem Detektor und/oder der Verarbeitungseinheit angeordnet ist.

**9.** System nach dem vorhergehenden Anspruch, wobei das optische Splitter-/Rekombinationssystem (SSR) ferner konfiguriert ist, um ein virtuelles oder reales Zwischenbild (PS) des Referenzstrahls in einer Ebene rechtwinklig zur optischen Achse zu bilden, genannt Zwischenbildebene (PI), wobei die Zwischenebene so angeordnet ist, dass sie Fransen flacher Farbe erzeugt, welche durch Interferenz zwischen den Teilen auf jedem beleuchteten Pixel erzielt werden.

**10.** System nach dem vorhergehenden Anspruch, wobei das optische Splitter-/Rekombinationssystem (SSR) so konfiguriert ist, dass die Zwischenbildebene mit einer Ebene übereinstimmt, welche eine Pupille oder eine Blende des optischen Bildgebungssystems (Im) umfasst.

**11.** System nach einem der Ansprüche 9 bis 10, wobei das optische Splittersystem (LS) eine integrierte optische Schaltung umfasst, genannt erste integrierte optische Schaltung (OI1), in welcher die Laserstrahlung gekoppelt ist, wobei mindestens ein Hohlwellenleiter der ersten integrierten Schaltung den Bezugsstrahl leitet, wobei die erste integrierte optische Schaltung ferner eine Vielzahl von Hohlwellenleitern umfasst, welche jeweils mindestens ein Beugungsgitter umfassen, genannt Objektgitter, um den Objektstrahl zu bilden.

**12.** System nach einem der Ansprüche 9 bis 11, wobei das optische Rekombinationssystem (SR) eine integrierte optische Schaltung umfasst, genannt zweite integrierte optische Schaltung (OI2), in welcher der Referenzstrahl mithilfe eines optischen Elements (FO) gekoppelt ist, wobei die zweite integrierte optische Schaltung mindestens einen Hohlwellenleiter umfasst, welcher mindestens ein Beugungsgitter umfasst, genannt Referenzgitter (RR), wobei das Referenzgitter den Referenzstrahl in den freien Raum und in das optische Bildgebungssystem koppelt, wobei die zweite integrierte optische Schaltung in der Zwischenbildebene dergestalt angeordnet ist, dass das Referenzgitter das Zwischenbild (PS) bildet.

**13.** System nach dem vorhergehenden Anspruch, wobei das optische Element eine optische Faser (FO) ist, welche den Referenzstrahl, welcher der ersten integrierten optischen Schaltung entspringt, in die zweite integrierte optische Schaltung leitet.

**14.** System nach einem der Ansprüche 8 bis 10, wobei das optische Splitter-/Rekombinationssystem eine integrierte optische Schaltung umfasst, genannt dritte integrierte optische Schaltung (OI3), in welcher die Laserstrahlung gekoppelt ist, wobei die integrierte optische Schaltung das optische Splittersystem (LS) und das optische Rekombinationssystem (SR) umfasst.

**15.** System nach Anspruch 9 oder 10, wobei das optische Splitter-/Rekombinationssystem ferner ein optisches Zwischensystem (SI) umfasst, welches nach dem optischen Splittersystem (LS) und vor dem optischen Rekombinationssystem (SR) angeordnet ist, wobei das optische Zwischensystem angepasst ist, um den Referenzstrahl zu fokussieren und das Zwischenbild bilden.

**16.** System nach einem der Ansprüche 7 bis 15, wobei eine digitale Öffnung (f#) des optischen Bildgebungssystems (Im) und eine Wellenlänge ($\lambda 0$) des Laserstrahls dergestalt bestimmt werden, dass eine seitliche Abmessung ($\phi g$) der Speckle-Körner (SG) gegebenenfalls kleiner als oder gleich einer Abmessung (ds) der lichtempfindlichen Oberfläche eines Pixels ist, und größer oder gleich einer Abmessung der Kopplungszone ist.

**Claims**

**1.** A detection device (10) for a coherent imaging system comprising:

- a detector (Det) comprising a matrix array of pixels (P), each pixel (P) comprising a photodetector component (PD) having a photosensitive surface (Sph), the detector being designed to be illuminated by a coherent beam, called the image beam (Lo,rim) consisting of grains of light called speckle grains (SG),
- a matrix array of transmissive deflecting elements (DE) arranged on the side of the illumination by the coherent beam, a deflecting element being associated with a group of pixel(s) comprising at least one pixel, and configured to be individually orientable by means of an electrical signal, so as to deflect a fraction of the image beam incident on said group, and thus modify the spatial distribution of the speckle grains in the plane of the photosensitive surface,
- each group of pixel(s) further comprising a feedback loop (SL) associated with the deflecting element and configured to actuate the deflecting element so as to optimise the signal or the signal-to-noise ratio from the light detected by the one or more photodetector components of said group of pixels, the feedback loop comprising a feedback circuit (SLC).

**2.** The detection device according to the preceding claim, wherein the deflecting element is chosen from a prism, a polyhedron, a spherical cap, and a diffractive optical element.

**3.** The detection device according to one of the preceding claims, wherein each deflecting element comprises at least two electrodes (E1, E2) respectively facing at least two electrodes (DE1, DE2) arranged on the surface of the detector, the deflecting element being actuated electrostatically by applying voltages to the electrodes and along at least one axis of rotation parallel to the plane of the detector.

**4.** The detection device according to one of the preceding claims, wherein a deflecting element is associated with a group of n x m pixels, the feedback being carried out on the basis of the n x m signals detected by the photodetector components of said pixels of the group, according to an optimisation criterion.

**5.** The detection device according to one of the preceding claims, wherein the detector further comprises a matrix array (MCZ) of coupling zones (CZ) that is arranged between the matrix array of deflecting elements and the photodetector component, a coupling zone being associated with a pixel and configured to form an aperture through which the image beam illuminates the photodetector component of the associated pixel, a dimension (dc) of the aperture being smaller than a dimension (ds) of the photosensitive surface of the pixel.

**6.** The detection device according to one of the preceding claims, wherein a distance between the matrix array of deflecting elements and the detector is between one and ten times a dimension of the deflecting element.

**7.** A coherent imaging system (20) comprising:

- a laser source (SL1) configured to emit a laser radiation (L1) in the direction of a scene to be observed (Obj),
- a detection device (10) according to one of claims 1 to 6,
- an optical imaging system (Im1) producing an image of the scene by focusing a beam reflected by the scene (Lo,r) on the detector, forming said image beam (Lo,rim).

**8.** A coherent lidar imaging system (30) comprising:

- a laser source (SL) configured to emit a laser radiation (L) with a temporally modulated optical frequency ($F_L$),
- a splitting/recombining optical system (SSR) comprising at least:
- a splitter optical system (LS) designed to spatially split the laser radiation (L) into a beam called the reference beam ($L_{ref}$) and into a beam called the object beam ($L_o$) that is directed towards the scene to be observed (Obj);
- a recombining optical system (SR) designed to spatially superpose the reference beam ($L_{ref}$) onto the beam reflected by said scene ($L_{o,r}$), so as to form a recombined beam ($L_{rec}$),
- a detection device (10) according to one of claims 1 to 6,
- an optical imaging system (Im) having an optical axis (AO) and producing an image of the scene by focusing a beam reflected by the scene (Lo,r) on the detector, forming said image beam (Lo,rim),

the splitting/recombining optical system (SSR) and the optical imaging system (Im) being configured such that each pixel of the detector receives a portion of the image beam (Lo,rim) and a portion of the reference beam (Lref), and that said portions are spatially superposed coherently onto each pixel,
- the coherent lidar imaging system further comprising at least one electronic processing circuit (PC) configured to calculate, for each pixel, a frequency (F(i,j)) of a beat of the portion of the image beam with the portion of the reference beam illuminating said pixel,
- a processing unit (UT) connected to the laser source and to the detection device and configured to determine a distance of points of the scene that are imaged on said pixels, on the basis of the calculated beat frequency associated with each pixel and on the basis of the modulated optical frequency of the laser radiation, said electronic processing circuit being located in the detector and/or in the processing unit.

**9.** The system according to the preceding claim, wherein said splitting/recombining optical system (SSR) is further configured to form a real or virtual intermediate image (PS) of the reference beam in a plane perpendicular to said optical axis, called the intermediate image plane (PI), said intermediate plane being arranged so as to generate flat-tint fringes, obtained by interference between said portions, on each illuminated pixel.

**10.** The system according to the preceding claim, wherein said splitting/recombining optical system (SSR) is configured so that the intermediate image plane is coincident with a plane comprising a pupil or a diaphragm of said optical imaging system (Im).

**11.** The system according to any one of claims 9 to 10, wherein the splitter optical system (LS) comprises an integrated optical circuit, called the first integrated optical circuit (OI1), in which said laser radiation is coupled, at least one waveguide of said first integrated circuit guiding said reference beam, the first integrated optical circuit further comprising a plurality of waveguides each comprising at least one diffraction grating, called the object grating, so as to form the object beam.

**12.** The system according to one of claims 9 to 11, wherein the recombining optical system (SR) comprises an integrated optical circuit, called the second integrated optical circuit (012), in which said reference beam is coupled by means of an optical element (FO), the second integrated optical circuit comprising at least one waveguide comprising at least one diffraction grating called the reference grating (RR), the reference grating coupling the reference beam towards the free space and towards the optical imaging system, the second integrated optical circuit being arranged in said intermediate image plane so that the reference grating forms the intermediate image (PS).

**13.** The system according to the preceding claim, wherein said optical element is an optical fibre (FO) guiding said reference beam originating from the first integrated optical circuit to said second integrated optical circuit.

**14.** The system according to one of claims 8 to 10, wherein the splitting/recombining optical system comprises an integrated optical circuit, called the third integrated circuit (013), in which said laser radiation is coupled, said integrated optical circuit comprising the splitter optical system (LS) and said recombining optical system (SR).

**15.** The system according to claim 9 or 10, wherein the splitting/recombining optical system further comprises an intermediate optical system (SI), arranged after the splitter optical system (LS), and before the recombining optical system (SR), the intermediate optical system being designed to focus the reference beam and form said intermediate image.

**16.** The system according to one of claims 7 to 15, wherein a digital aperture (f#) of the optical imaging system (Im) and a wavelength ($\lambda 0$) of the laser beam are determined such that a lateral dimension ($\phi g$) of said speckle grains (SG) is smaller than or equal to a dimension (ds) of the photosensitive surface of a pixel and larger than or equal to a dimension of the coupling zone, where applicable.

[Fig. 1]

f
t
fS
fLO
fB
B
T
Δt = 2z/c
i
Sb
Te = 1/fR
NTe
Te
2Te
FMCW
LO
PD
S
z
T

FIG.1

[Fig. 2]

O
L
IC
Fib
Las
Mod
SED
FIG.2

[Fig. 3]

Fib
PD
Res

FIG.3

[Fig. 4]

ϕg<apix
ϕg
i
t
i
t
id
t
ϕg>apix
apix
ϕg
id
t


FIG.4

[Fig. 5]

$L_{o,rim}$
$\phi_g$
SG
DE
SL
Det
Sph
SLC
P
PD
$d_S$
$d_{pix}$
10
FIG.5

[Fig. 6]

10
SG
DE
SG
SG
DE
Sph
Det
PD
SG
φg
Sph
SG
Sph

FIG.6

[Fig. 7]

DE
c
DE
b
FIG.7
E'2
DE
SL
E2
a
SG
E'1
E1
PD
P

[Fig. 8A]

MA
FR
E'2
A
ME
E'1
A
A-A
E'1
E'2
FR
RA

FIG.8A

[Fig. 8B]

E'2
E'3
E'4
E'1
A-A
E'1
E'2
FR
RA

FIG.8B

[Fig. 9]

L o,rim
SG
DE
SL
MCZ
Det
Sph
SLC
CZ
PD
φg
dc
ds
dpix
10

FIG.9

[Fig. 10]

SG
SG
DE
MCZ
Sph
Det
PD
CZ
SG
CZ
SG
DE
SG
CZ
FIG.10

[Fig. 11A]

E'2
DE
E'1
E1
E2
$d_c$
MCZ
4
Sph
Sub
SLC, CEpt
PD
3
IL
BI
Det
IL'
PC
Sub'


FIG.11A

[Fig. 11B]

E'2
DE
E'1
E1
E2
IL
3
Sph
MCZ
SLC, CEpt, Pc
Det
PD
Sub

FIG.11B

[Fig. 12]

20
Im1
10
$L_{o,r}$
$L_{o,rim}$
UT1
Obj
L1
SL1
FIG.12

[Fig. 13]

Obj
z
$L_{o,r}$
$L_o$
LS
$L_{ref}$
SSR
SR
$L_{rec}$
AO
PS,PI
Diaph
Im
$L_{o,rim}$ + Lref
30
10
$P_i$
UT
$F_L$
L
SL

FIG.13

[Fig. 14]

A
B
SG
Lref
DE
MCZ
Det
PD
P0
P1
P2
P3
OZ
CZ
SC
Lref
Sref

FIG.14

[Fig. 15]

F
$T_e=1/f_R$
$F_{AC}$
$F_{DC}$
t

FIG.15

[Fig. 16]

A
B
C
$S_C$
$S_G$
$S_{ref}$
OZ
OZ

FIG.16

[Fig. 17]

B
SG∩Sref∩Sc
FAC(t)
t

A
Sref
Sc
SG
SG∩Sref∩Sc
FAC(t)
FAC
t

FIG.17

[Fig. 18]

Obj
$L_o$
$L_{o,r}$
RR
SR
PS,PI
DOE
Proj
$Mi_1$
$Mi_2$
$LP_1$
$LP_2$
SL
LS
$L_{ref}$
FO
$OI_1$
$OI_2$
UT
Im
10
SR
RR
30

FIG.18

[Fig. 19]

z
Obj
$L_o$
$L_{o,r}$
DOE
SR
PS,PI
Im
F
10
$L_{ref}$
LS
SL
UT
SSR
$OI_3$
RR
SR
GR
LS

FIG.19

[Fig. 20]

Obj
$L_o$
LS
DOE
$Mi_1$
$LP_1$
$LP_2$
$Mi_2$
SL
Proj
SSR
SI
$L_{o,r}$
SR
$L_{rec}$
AO
Im
PS,P
10
UT
30

FIG.20

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 2000408
- FR 200408


### Littérature non-brevet citée dans la description


- **AFLATOUNI.** Nano photonic coherent imager. *Optics Express,* 2015, vol. 23 (4), 5117